# EUROPEAN PATENT SPECIFICATION

(11) **EP 4 344 160 B1**
(45) Date of publication and mention of the grant of the patent: **29.07.2026**
(21) Application number: 21942828.1
(22) Date of filing: 27.12.2021
(51) Int. Cl.: G06F 3/0482, G06F 3/04842, G06F 3/04883, G06F 3/0485, H04L 51/04, H04M 1/72436

(54) **METHOD FOR CREATING CHAT INTERFACE, AND ELECTRONIC DEVICE**
VERFAHREN ZUR ERZEUGUNG EINER CHAT-SCHNITTSTELLE UND ELEKTRONISCHE VORRICHTUNG
PROCÉDÉ DE CRÉATION D'UNE INTERFACE DE DISCUSSION, ET DISPOSITIF ÉLECTRONIQUE

(30) Priority: 24.05.2021 CN 202110567975
(43) Date of publication of application: 27.03.2024
(73) Proprietor: Huawei Technologies Co., Ltd., Shenzhen, Guangdong 518129 (CN)
(72) Inventor: JIANG, Ming, Shenzhen, Guangdong 518129 (CN); LIU, Feng, Shenzhen, Guangdong 518129 (CN)
(74) Representative: Thun, Clemens
(86) International application number: PCT/CN2021/141787
(87) International publication number: WO 2022/247265

(56) References cited:
- EP-A2- 2 770 417
- CN-A- 110 971 423
- CN-A- 112 130 950
- CN-A- 112 583 700
- JP-B1- 6 498 350
- US-A1- 2014 298 210
- US-A1- 2018 198 887
- US-A1- 2023 102 346

## Description

### TECHNICAL FIELD

This application relates to the field of communication technologies, and in particular, to a chat interface creation method and an electronic device.

### BACKGROUND

Instant messaging (instant messaging, IM) refers to real-time communication performed over a network. Instant messaging allows two or more users to instantaneously transmit text messages, files, voice messages, or the like over a network, or allows two or more users to make a voice call or a video call over a network.

Instant messaging usually can be divided into a "one-to-one" private chat mode and a "many-to-many" group chat mode. The "many-to-many" group chat mode means that in a common group, all member users can simultaneously view a chat message sent by another member user in the group, that is, each member user can perform instant messaging with another member user in the group.

When a user in a group chat mode wants to create a new private chat or group chat, the user usually needs to return to a home page of an instant messaging application from a current group chat interface, and then select a new member user on the home page to create a private chat, or re-create a chat group by using a group chat creation interface on the home page to start a new group chat. It can be learned that when creating a new chat, the user needs to jump to at least one interface (for example, the home page of the instant messaging application) to create a new private chat or group chat. Therefore, users cannot communicate quickly due to complicated operation steps.
Further, US 2014/298210 Al refers to an apparatus and a method for providing a private chat in a group chat without having to switch between respective display screens. In the method, at least one group chat participant selected from group chat counterparts is designated as a private chat participant, identification information regarding the private chat participant is displayed in a message input window of a group chat window which is commonly used in a group chat and a private chat. Moreover, a group chat participant corresponding to the motion, such as a drag motion or tap motion is designated as a private chat participant, when a drag motion from a chat log of at least one group chat counterpart displayed in a chat log window to the message input window is detected.

### SUMMARY

This application provides a chat interface creation method and an electronic device. In the method, a new chat interface can be quickly created based on a current chat interface, so that quick communication between users is implemented. This problem is solved by the subject matter of the independent claims. Further implementation forms are provided in the dependent claims.

To achieve the foregoing objective, this application provides the following technical solutions.

According to a first aspect, this application provides a chat interface creation method, and the method is applied to an electronic device including a touchscreen. The method includes: displaying a first group chat interface on the touchscreen; receiving a first operation in the first group chat interface; and displaying a second group chat interface based on the first operation.
The first group chat interface is a chat interface of a first chat group, and the first chat group includes a first user who enters the first group chat interface on the electronic device. The second group chat interface is a chat interface of a second chat group, and both the second chat group and the first chat group include the first user.

The first user is a virtual user, or the first user may be understood as an account of a group member in the first chat group.

According to the method, the electronic device may display the second group chat interface based on the first operation received in the first group chat interface, that is, the electronic device may display a chat interface of a new chat group based on the first operation received in the first group chat interface. It can be learned that, according to the method, when creating a new chat interface based on a current chat interface, the electronic device does not need to return to a home page of an instant messaging application. To be specific, the method reduces a quantity of intermediate pages to be jumped to when the electronic device creates the new chat interface based on the current chat interface. Therefore, efficiency of creating, by the electronic device, the new chat interface based on the current chat interface is improved, and then quick communication between users is implemented.

In a possible design, the first operation is a press operation for a first location and a second location in the first group chat interface. The first location is a location that is of an identifier of any second user in the first chat group and that is in the first group chat interface. If duration of the press operation is greater than a first threshold,
the displaying a second group chat interface based on the first operation includes: displaying, in response to the first operation, a member selection interface that includes an identifier of a member user in the first chat group; receiving, in the member selection interface, a second operation for selecting at least one second user; and displaying the second group chat interface based on the second operation, where the second chat group corresponding to the second group chat interface is a chat group including the first user and the at least one second user selected through the second operation.

In another possible design, the member selection interface further includes a first control used to indicate to create a chat task.

The method further includes: receiving a third operation for the first control in the member selection interface. The displaying the second group chat interface based on the second operation includes: displaying the second group chat interface in response to the second operation and the third operation.

According to the two possible designs, when creating the second group chat interface based on the first group chat interface, the electronic device does not need to return to a home page of an instant messaging app. Therefore, a quantity of intermediate pages to be jumped to when the electronic device creates a new chat interface based on a current chat interface is reduced, efficiency of creating, by the electronic device, the new chat interface based on the current chat interface is improved, and then quick communication between users is implemented.

In another possible design, the member selection interface further includes a second control used to indicate to create a chat task and a file sending task. A file type of a to-be-sent file in the file sending task includes any file type in a document file, an image file, or a media file.

The method further includes: receiving a fourth operation for the second control in the member selection interface. The displaying the second group chat interface based on the second operation includes: displaying the second group chat interface in response to the second operation and the fourth operation. The second group chat interface includes the file sent in the file sending task.

Usually, the file included in the second group chat interface is a file identifier of the file. For example, when the file is an image file, a file identifier of the image file may be a thumbnail of the image file.

In another possible design, the method further includes: sending the file to be sent in the file sending task to a device corresponding to the member user selected through the second operation; or sending the file to be sent in the file sending task to a server, so that a device corresponding to the member user selected through the second operation can obtain, from the server, the file to be sent in the file sending task. The server may be a server of an instant messaging application.

According to the two possible designs, in a process in which the electronic device creates the second group chat interface based on the first group chat interface, the electronic device may further initiate the file sending task. Compared with a method of returning to a home page of an instant messaging application to create a new chat interface and then initiating a file sending task in the new chat interface, the method provided in this application greatly reduces a quantity of intermediate pages that need to be jumped to when the electronic device creates a new chat interface based on a current chat interface and initiates a file sending task in the new chat interface, that is, the method provided in this application improves efficiency of communication performed by a user by using an instant messaging application.

In another possible design, the member selection interface further includes a third control used to indicate to create a chat task and a video/audio call task.

The method further includes: receiving a fifth operation for the third control in the member selection interface. The displaying the second group chat interface based on the second operation includes: displaying the second group chat interface in response to the second operation and the fifth operation. The second group chat interface is an interface for initiating a video/audio call to the member user selected through the second operation.

In another possible design, the method further includes: sending a video/audio call request to a device corresponding to the member user selected through the second operation.

In another possible design, the method further includes: after a video/audio call ends, displaying a second group chat interface including a video/audio call record.

According to the possible designs, in a process in which the electronic device creates the second group chat interface based on the first group chat interface, the electronic device may further initiate a video/audio call task. Compared with a method of returning to a home page of an instant messaging application to create a new chat interface and then initiating a video/audio call task in the new chat interface, the method provided in this application greatly reduces a quantity of intermediate pages that need to be jumped to when the electronic device creates a new chat interface based on a current chat interface and initiates a video/audio call task in the new chat interface, that is, the method provided in this application improves efficiency of communication performed by a user by using an instant messaging application.

In another possible design, the first operation is a press operation for a first location and a second location in the first group chat interface. The first location is a location that is of an identifier of any second user in the first chat group and that is in the first group chat interface. If duration of the press operation is less than a first threshold and the second location is any blank location in the first group chat interface,
the displaying a second group chat interface based on the first operation includes: displaying the second group chat interface in response to the first operation, where the second chat group corresponding to the second group chat interface is a two-person chat group including the first user and the any second user.

In another possible design, the first operation is a press operation for a first location and a second location in the first group chat interface. The first location is a location that is of an identifier of any second user in the first chat group and that is in the first group chat interface. If duration of the press operation is less than a first threshold and the second location is a location that is of an identifier of another second user other than the any second user in the first chat group and that is in the first group chat interface,
the displaying a second group chat interface based on the first operation includes: displaying the second group chat interface in response to the first operation, where the second chat group corresponding to the second group chat interface is a three-person chat group including the first user, the any second user, and the another second user.

According to the two possible designs, the electronic device may directly display the second group chat interface in response to the first operation. In other words, according to the method, when creating a new chat interface based on a current chat interface, the electronic device does not need to return to a home page of an instant messaging application. To be specific, the method reduces a quantity of intermediate pages to be jumped to when the electronic device creates the new chat interface based on the current chat interface.

In another possible design, the first operation is a press operation for any two blank locations in the first group chat interface.

The displaying a second group chat interface based on the first operation includes: displaying, in response to the first operation, a member selection interface that includes an identifier of a member user in the first chat group; receiving, in the member selection interface, a second operation for selecting at least one second user; and displaying the second group chat interface based on the second operation, where the second chat group corresponding to the second group chat interface is a group including the first user and the at least one second user selected through the second operation.

In another possible design, the first operation is a touch and hold operation for any blank location in the first group chat interface. If duration of the touch and hold operation is greater than a second threshold,
the displaying a second group chat interface based on the first operation includes: displaying, in response to the first operation, a member selection interface that includes an identifier of a member user in the first chat group; receiving, in the member selection interface, a second operation for selecting at least one second user; and displaying the second group chat interface based on the second operation, where the second chat group corresponding to the second group chat interface is a group including the first user and the at least one second user selected through the second operation.

In another possible design, the first operation is a slide operation. A sliding track of the slide operation includes an identifier of at least one second user.

The displaying a second group chat interface based on the first operation includes: displaying the second group chat interface in response to the first operation, where the second chat group corresponding to the second group chat interface is a chat group including the first user and the at least one second user.

According to this possible design, the electronic device may directly display the second group chat interface in response to the slide operation, and member users of the second chat group corresponding to the second group chat interface include all users on the sliding track of the slide operation. In other words, according to the method, when creating a new chat interface based on a current chat interface, the electronic device does not need to return to a home page of an instant messaging application. To be specific, the method reduces a quantity of intermediate pages to be jumped to when the electronic device creates the new chat interface based on the current chat interface.

In another possible design, the slide operation passes through a location of the identifier of the at least one second user in the first group chat interface, and ends at a location of an identifier of the first user in the first group chat interface.

In another possible design, the identifier of the at least one second user moves with sliding of the slide operation in the first group chat interface.

In another possible design, the slide operation passes through locations of the identifier of the at least one second user and an identifier of the first user in the first group chat interface, and ends at any blank location in the first group chat interface.

In another possible design, the identifier of the at least one second user and the identifier of the first user move with sliding of the slide operation in the first group chat interface.

In another possible design, the slide operation passes through locations/a location of identifiers of one or more second users in the first chat group and/or an identifier of the first user in the first group chat interface, and ends at a location that is in the first group chat interface and that is of an identifier of any second user other than the one or more second users in the first chat group.

It can be learned that the at least one second user included in the sliding track of the slide operation includes the one or more second users and the any second user.

When the slide operation passes through the locations that are in the first group chat interface and that are of the identifiers of the one or more second users in the first chat group, the identifiers of the one or more second users move with sliding of the slide operation in the first group chat interface.

When the slide operation passes through the location that is in the first group chat interface and that is of the identifier of the first user in the first chat group, the identifier of the first user moves with sliding of the slide operation in the first group chat interface.

When the slide operation passes through the locations of the identifiers of the one or more second users in the first chat group and the identifier of the first user in the first group chat interface, the identifiers of the one or more second users and the identifier of the first user move with sliding of the slide operation in the first group chat interface.

According to the several possible implementations, visual effect of the slide operation may be considered as dragging a user identifier through which the slide operation passes to an end location of the slide operation. In response to the slide operation, the electronic device may directly display a chat interface between a user indicated by an identifier on the sliding track of the slide operation and the first user, that is, the second group chat interface. The identifier of the first user may also be included in the sliding track of the slide operation. It can be learned that, according to the method, when creating a new chat interface based on a current chat interface, the electronic device does not need to return to a home page of an instant messaging application. To be specific, the method reduces a quantity of intermediate pages to be jumped to when the electronic device creates the new chat interface based on the current chat interface.

In another possible design, the second group chat interface includes a chat record that is of a member user in the second chat group and that is in the first chat group.

In another possible design, the method further includes: sending the chat record to a device of another member user other than the first user in the second chat group; or sending the chat record to a server, so that a device of another member user other than the first user in the second chat group can obtain the chat record from the server. The server may be a server of an instant messaging application.

According to the two possible implementations, the member user in the second chat group can conveniently view a chat record that is of a member in the current chat group and that is in the first chat group. That is, user experience is improved.

According to a second aspect, this application provides a chat interface creation apparatus. The apparatus includes: a display unit, configured to display a first group chat interface, where the first group chat interface is a chat interface of a first chat group, and the first chat group includes a first user who enters the first group chat interface on the apparatus; a receiving unit, configured to receive a first operation in the first group chat interface; and a control unit, configured to control, based on the first operation, to display a second group chat interface. The second group chat interface is a chat interface of a second chat group, and both the second chat group and the first chat group include the first user.

In a possible design, the first operation is a press operation for a first location and a second location in the first group chat interface. The first location is a location that is of an identifier of any second user in the first chat group and that is in the first group chat interface. If duration of the press operation is greater than a first threshold, the control unit is specifically configured to control, in response to the first operation, to display a member selection interface that includes an identifier of a member user in the first chat group. The receiving unit is further configured to receive, in the member selection interface, a second operation for selecting at least one second user. The control unit is further specifically configured to control, based on the second operation, to display the second group chat interface. The second chat group corresponding to the second group chat interface is a chat group including the first user and the at least one second user selected through the second operation.

In another possible design, the member selection interface further includes a first control used to indicate to create a chat task, and the receiving unit is further configured to receive a third operation for the first control in the member selection interface. The control unit is further specifically configured to control, in response to the second operation and the third operation, to display the second group chat interface.

In another possible design, the member selection interface further includes a second control used to indicate to create a chat task and a file sending task. A file type of a to-be-sent file in the file sending task includes any file type in a document file, an image file, or a media file. The receiving unit is further configured to receive a fourth operation for the second control in the member selection interface. The control unit is further specifically configured to control, in response to the second operation and the fourth operation, to display the second group chat interface. The second group chat interface includes the file sent in the file sending task. Usually, the file included in the second group chat interface is a file identifier of the file. For example, when the file is an image file, a file identifier of the image file may be a thumbnail of the image file.

In another possible design, the apparatus further includes: a sending unit, configured to send the file to be sent in the file sending task to a device corresponding to the member user selected through the second operation; or send the file to be sent in the file sending task to a server, so that a device corresponding to the member user selected through the second operation can obtain, from the server, the file to be sent in the file sending task. The server may be a server of an instant messaging application.

In another possible design, the member selection interface further includes a third control used to indicate to create a chat task and a video/audio call task. The receiving unit is further configured to receive a fifth operation for the third control in the member selection interface. The control unit is further specifically configured to control, in response to the second operation and the fifth operation, to display the second group chat interface. The second group chat interface is an interface for initiating a video/audio call to the member user selected through the second operation.

In another possible design, the sending unit is further configured to send a video/audio call request to a device corresponding to the member user selected through the second operation.

In another possible design, the display unit is further configured to: after a video/audio call ends, display a second group chat interface including a video/audio call record.

In another possible design, the first operation is a press operation for a first location and a second location in the first group chat interface. The first location is a location that is of an identifier of any second user in the first chat group and that is in the first group chat interface. If duration of the press operation is less than a first threshold and the second location is any blank location in the first group chat interface, the control unit is specifically configured to control, in response to the first operation, to display the second group chat interface. The second chat group corresponding to the second group chat interface is a two-person chat group including the first user and the any second user.

In another possible design, the first operation is a press operation for a first location and a second location in the first group chat interface. The first location is a location that is of an identifier of any second user in the first chat group and that is in the first group chat interface. If duration of the press operation is less than a first threshold and the second location is a location that is of an identifier of another second user other than the any second user in the first chat group and that is in the first group chat interface, the control unit is specifically configured to control, in response to the first operation, to display the second group chat interface. The second chat group corresponding to the second group chat interface is a three-person chat group including the first user, the any second user, and the another second user.

In another possible design, the first operation is a press operation for any two blank locations in the first group chat interface. The control unit is specifically configured to control, in response to the first operation, to display a member selection interface that includes an identifier of a member user in the first chat group. The receiving unit is further configured to receive, in the member selection interface, a second operation for selecting at least one second user. The control unit is further specifically configured to control, based on the second operation, to display the second group chat interface. The second chat group corresponding to the second group chat interface is a group including the first user and the at least one second user selected through the second operation.

In another possible design, the first operation is a touch and hold operation for any blank location in the first group chat interface. If duration of the touch and hold operation is greater than a second threshold, the control unit is specifically configured to control, in response to the first operation, to display a member selection interface that includes an identifier of a member user in the first chat group. The receiving unit is further configured to receive, in the member selection interface, a second operation for selecting at least one second user. The control unit is further specifically configured to control, based on the second operation, to display the second group chat interface. The second chat group corresponding to the second group chat interface is a group including the first user and the at least one second user selected through the second operation.

In another possible design, the first operation is a slide operation. A sliding track of the slide operation includes an identifier of at least one second user. The control unit is specifically configured to control, in response to the first operation, to display the second group chat interface. The second chat group corresponding to the second group chat interface is a chat group including the first user and the at least one second user.

In another possible design, the slide operation passes through a location of the identifier of the at least one second user in the first group chat interface, and ends at a location of an identifier of the first user in the first group chat interface.

In another possible design, the identifier of the at least one second user moves with sliding of the slide operation in the first group chat interface.

In another possible design, the slide operation passes through locations of the identifier of the at least one second user and an identifier of the first user in the first group chat interface, and ends at any blank location in the first group chat interface.

In another possible design, the identifier of the at least one second user and the identifier of the first user move with sliding of the slide operation in the first group chat interface.

In another possible design, the slide operation passes through locations/a location of identifiers of one or more second users in the first chat group and/or an identifier of the first user in the first group chat interface, and ends at a location that is in the first group chat interface and that is of an identifier of any second user other than the one or more second users in the first chat group. It can be learned that the at least one second user included in the sliding track of the slide operation includes the one or more second users and the any second user.

When the slide operation passes through the locations that are in the first group chat interface and that are of the identifiers of the one or more second users in the first chat group, the identifiers of the one or more second users move with sliding of the slide operation in the first group chat interface.

When the slide operation passes through the location that is in the first group chat interface and that is of the identifier of the first user in the first chat group, the identifier of the first user moves with sliding of the slide operation in the first group chat interface.

When the slide operation passes through the locations of the identifiers of the one or more second users in the first chat group and the identifier of the first user in the first group chat interface, the identifiers of the one or more second users and the identifier of the first user move with sliding of the slide operation in the first group chat interface.

In another possible design, the second group chat interface includes a chat record that is of a member user in the second chat group and that is in the first chat group.

In another possible design, the sending unit is further configured to send the chat record to a device of another member user other than the first user in the second chat group; or send the chat record to a server, so that a device of another member user other than the first user in the second chat group can obtain the chat record from the server. The server may be a server of an instant messaging application.

It should be understood that for descriptions of possible technical solutions performed by the functional modules/units in the second aspect and beneficial effects, refer to the technical solutions provided in the first aspect or the corresponding possible designs of the first aspect. Details are not described herein again.

According to a third aspect, this application provides an electronic device. The electronic device includes a touchscreen configured to display a chat interface. The electronic device invokes program instructions stored in a memory, to perform any chat interface creation method provided in the first aspect and any possible design of the first aspect.

According to a fourth aspect, this application provides a computer-readable storage medium. The computer-readable storage medium includes program instructions, and when the program instructions are run on an electronic device including a touchscreen, the electronic device is enabled to perform any chat interface creation method provided in the first aspect and any possible design of the first aspect.

According to a fifth aspect, this application provides a computer program product. When the computer program product runs on an electronic device or a chat interface creation apparatus, any method provided in any possible implementation of the first aspect is performed.

It may be understood that any apparatus, electronic device, computer storage medium, computer program product, or the like provided above may be applied to the corresponding method provided above. Therefore, for beneficial effects that can be achieved, refer to the beneficial effects in the corresponding method. Details are not described herein again.

### BRIEF DESCRIPTION OF DRAWINGS

FIG. 1 is a schematic diagram of a hardware structure of a mobile phone according to an embodiment of this application;
FIG. 2 is a schematic flowchart of a chat interface creation method according to an embodiment of this application;
FIG. 3 is a schematic diagram of a first group chat interface displayed on a display panel of a mobile phone according to an embodiment of this application;
FIG. 4 is a schematic diagram of a first operation according to an embodiment of this application;
FIG. 5 is a schematic diagram of a second group chat interface displayed in response to a first operation according to an embodiment of this application;
FIG. 6 is a schematic diagram of a member selection interface according to an embodiment of this application;
FIG. 7(a) to FIG. 7(c) are a schematic diagram of displaying a member list interface by a mobile phone in response to a first slide operation received on a member selection interface according to an embodiment of this application;
FIG. 8 is a schematic diagram of displaying a second group chat interface by a mobile phone in response to a second operation and a third operation according to an embodiment of this application;
FIG. 9(a) to FIG. 9(c) are a schematic diagram of displaying a second group chat interface by a mobile phone in response to a second operation and a fourth operation according to an embodiment of this application;
FIG. 10(a) to FIG. 10(c) are a schematic diagram of displaying a second group chat interface by a mobile phone in response to a second operation and a fifth operation according to an embodiment of this application;
FIG. 11(a) to FIG. 11(c) are a schematic diagram of creating an email sending task by a mobile phone in response to a second operation and a sixth operation according to an embodiment of this application;
FIG. 12 is a schematic diagram in which a second group chat interface includes a chat record that is of a member user in a second chat group and that is in a first chat group according to an embodiment of this application;
FIG. 13 is another schematic diagram of a first operation according to an embodiment of this application;
FIG. 14 is a schematic diagram of a second slide operation according to an embodiment of this application; and
FIG. 15 is a schematic diagram of a structure of a chat interface creation apparatus according to an embodiment of this application.

### DESCRIPTION OF EMBODIMENTS

In embodiments of this application, words such as "example" or "for example" are used to represent giving examples, illustrations, or descriptions. Any embodiment or design solution described as "example" or "for example" in embodiments of this application should not be construed as being more preferred or advantageous than other embodiments or design solutions. Specifically, the words such as "example" or "for example" are used to present related concepts in a specific manner.

In embodiments of this application, the terms "first" and "second" are merely used for description, but should not be understood as indicating or implying relative importance or implying a quantity of indicated technical features. Therefore, a feature limited by "first" or "second" may explicitly or implicitly include one or more features.

The term "at least one" in this application means one or more, and the term "a plurality of" in this application means two or more.

It should be further understood that in embodiments of this application, sequence numbers of processes do not mean a sequence of execution. The sequence of execution of the processes should be determined according to functions and internal logic of the processes, and should not constitute any limitation on an implementation process of embodiments of this application.

It should be further understood that the term "include" (also referred to as "includes", "including", "comprises", and/or "comprising") used in this specification specifies presence of the stated features, integers, steps, operations, elements, and/or components, without excluding presence or addition of one or more other features, integers, steps, operations, elements, components, and/or groups thereof.

It should be further understood that the term "if" may be interpreted as "when" ("when" or "upon"), "in response to determining", or "in response to detecting". Similarly, according to the context, the phrase "if determining" or "if detecting (a stated condition or event)" may be interpreted as "when determining", "in response to determining", "when detecting (a stated condition or event)", or "in response to detecting (a stated condition or event)".

It should be understood that "one embodiment", "an embodiment", "a possible implementation", "a possible case", and the like mentioned in the specification mean that specific features, structures, or characteristics related to embodiments or implementations are included in at least one embodiment of this application. Therefore, "in one embodiment", "in an embodiment", or "a possible implementation" appearing throughout the specification does not necessarily indicate a same embodiment. Further, these specific features, structures, or characteristics may be combined in one or more embodiments in any suitable manner.

An embodiment of this application provides a chat interface creation method. The method is applied to an electronic device including a touchscreen. According to the method, a second group chat interface can be created based on a first operation in a first group chat interface displayed on the touchscreen of the electronic device.

The first group chat interface is a chat interface of a first chat group, and the first chat group includes a first user who enters the first group chat interface on the electronic device. The second group chat interface is a chat interface of a second chat group. The first chat group and the second chat group include at least one common member user, that is, the first user.

For a specific description of the first user, refer to a description of the first user in S101 below. Details are not described herein.

According to the method, when the second group chat interface is created based on the first group chat interface, there is no need to return to a home page of an instant messaging app. To be specific, the method reduces a quantity of intermediate pages that need to be jumped to when the second group chat interface is created based on the first group chat interface. That is, the method improves efficiency of creating the second group chat interface based on the first group chat interface. In other words, in the method, a chat interface of a new chat group can be quickly created based on the first group chat interface displayed on the touchscreen of the electronic device, so that quick communication between the first user and a member user in the new chat group is implemented.

An embodiment of this application further provides an electronic device for creating a chat. The electronic device includes a touchscreen.

For example, the electronic device may be an electronic device such as a smartphone, a tablet computer, a notebook computer, a wearable electronic device, a personal digital assistant (personal digital assistant, PDA), or a netbook. This is not limited in this embodiment of this application.

It should be understood that the foregoing chat interface creation method may be implemented based on an application (application, app) that runs on the electronic device and has an instant messaging function. The application may be, for example, an instant messaging app, a browser app, or the like. This is not limited in this embodiment of this application.

The app may be an embedded application installed in the electronic device (that is, a system application of the electronic device), or may be a downloadable application.

The embedded application is an application provided by an operating system of the electronic device (for example, a mobile phone). For example, the embedded application may be an instant messaging app, a browser app, or the like provided before the mobile phone is delivered from a factory.

The downloadable application is an application that can provide a communication connection of the application. The downloadable application is an app that may be pre-installed in the electronic device, or may be a third-party app that is downloaded and installed in the device by a user. For example, the downloadable application may be WeChat. This is not specifically limited.

The following describes a hardware structure of the electronic device by using an example in which the electronic device is a mobile phone.

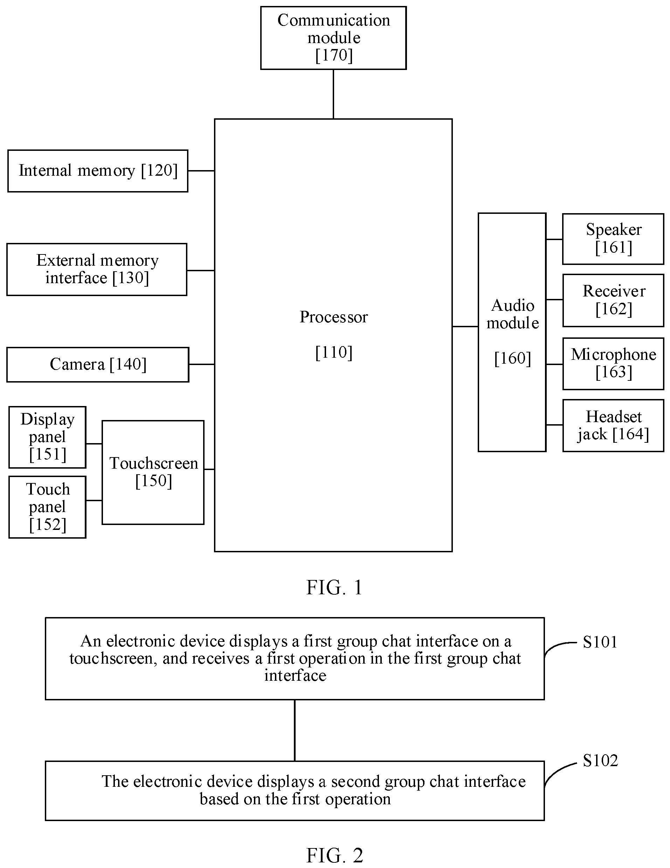

FIG. 1 is a schematic diagram of a hardware structure of a mobile phone 10 according to an embodiment of this application. As shown in FIG. 1, the mobile phone 10 may include a processor 110, an internal memory 120, an external memory interface 130, a camera 140, a touchscreen 150, an audio module 160, a communication module 170, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU).

Different processing units may be independent components, or may be integrated into one or more processors.

The controller may be a nerve center and a command center of the mobile phone 10. The controller may generate an operation control signal based on instruction operation code and a time sequence signal, to complete control of instruction fetching and instruction execution.

A memory may be further disposed in the processor 110, to store instructions and data.

In some embodiments, the memory in the processor 110 is a cache. The memory may store instructions or data just used or cyclically used by the processor 110. If the processor 110 needs to use the instructions or data again, the instructions or data may be directly invoked from the memory. This avoids repeated access, and reduces waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronous serial bus, and includes a serial data line (serial data line, SDA) and a serial clock line (derail clock line, SCL). The I2S interface may be used for audio communication.

The PCM interface may be configured to perform audio communication, and sample, quantize, and code analog signals.

The UART interface is a universal serial data bus, and is used for asynchronous communication. The bus may be a two-way communication bus. The bus converts to-be-transmitted data between serial communication and parallel communication.

The MIPI interface may be configured to connect the processor 110 to peripheral devices such as the camera 140 and the touchscreen 150. The MIPI interface includes a camera serial interface (camera serial interface, CSI), a display serial interface (display serial interface, DSI), and the like.

The GPIO interface may be configured by using software. The GPIO interface may be configured as a control signal, or may be configured as a data signal.

The internal memory 120 may be configured to store computer-executable program code, where the executable program code includes instructions. The processor 110 performs various function applications and data processing of the mobile phone 10, for example, perform the chat interface creation method provided in embodiments of this application, by running the instructions stored in the internal memory 120.

The external memory interface 130 may be configured to connect to an external memory card such as a micro SD card, to extend a storage capability of the mobile phone 10. The external memory card communicates with the processor 110 by using the external memory interface 130, to implement a data storage function. For example, a document file, an image file, and a media file (including an audio file and a video file) may be stored in the external memory card.

The camera 140 is configured to capture a still image or a video. An optical image of an object may be generated by using a lens and projected onto a photosensitive element. It should be understood that the mobile phone 10 may include n cameras 140, and n is a positive integer.

The touchscreen 150 is configured to implement interaction between the mobile phone 10 and a user. The touchscreen 150 includes a display panel 151 and a touch panel 152. The display panel 151 is configured to display a text, an image, a video, and the like. The touch panel 152 is configured to receive data entered through user touch.

The audio module 160 is configured to convert digital audio information into an analog audio signal for output, and is also configured to convert analog audio input into a digital audio signal. The audio module 160 may include at least one of a speaker 161, a receiver 162, a microphone 163, and a headset jack 164.

The speaker 161, also referred to as a "loudspeaker", is configured to convert an audio electrical signal into a sound signal.

The receiver 162, also referred to as an "earpiece", is configured to convert an audio electrical signal into a sound signal.

The microphone 163, also referred to as a "mike" or a "mic", is configured to convert a sound signal into an electrical signal.

The headset jack 164 is configured to connect to a wired headset. The headset jack 164 may be the USB interface, or may be a 3.2 mm open mobile terminal platform (open mobile terminal platform, OMTP) standard interface or a cellular telecommunications industry association of the USA (cellular telecommunications industry association of the USA, CTIA) standard interface.

In this way, the mobile phone 10 may implement an audio function by using the speaker 161, the receiver 162, the microphone 163, and the headset jack 164 in the audio module 160, the application processor, and the like. For example, voice input of a user and voice/music play are implemented.

The communication module 170 is configured to implement a communication function of the mobile phone 10. Specifically, the communication module 170 may be implemented by using an antenna, a mobile communication module, a wireless communication module, a modem processor, a baseband processor, and the like.

The antenna is configured to transmit and receive electromagnetic wave signals. Each antenna in the mobile phone 10 may be configured to cover one or more communication bands. Different antennas may be multiplexed to improve antenna utilization. For example, an antenna 1 used for the mobile communication module may be multiplexed as a diversity antenna of a wireless local area network. In some other embodiments, the antenna may be used in combination with a tuning switch.

The mobile communication module may provide a solution for wireless communication, including 2G/3G/4G/5G and the like, that is applied to the mobile phone 10. The mobile communication module may include at least one filter, a switch, a power amplifier, a low noise amplifier (low noise amplifier, LNA), and the like.

The mobile communication module may receive an electromagnetic wave by using the antenna, perform processing such as filtering and amplification on the received electromagnetic wave, and send a processed electromagnetic wave to the modem processor for demodulation. The mobile communication module may further amplify a signal modulated by the modem processor, and convert the signal into an electromagnetic wave for radiation through the antenna.

In some embodiments, at least some functional modules of the mobile communication module may be disposed in the processor 110.

In some other embodiments, at least some functional modules of the mobile communication module may be disposed in a same component as at least some modules of the processor 110. The modem processor may include a modulator and a demodulator.

The wireless communication module may provide a solution for wireless communication that is applied to the mobile phone 10 and that includes a wireless local area network (wireless local area networks, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module may be one or more components that integrate at least one communication processing module.

The wireless communication module receives an electromagnetic wave through the antenna, performs frequency modulation and filtering on an electromagnetic wave signal, and sends a processed signal to the processor 110. The wireless communication module may further receive a to-be-sent signal from the processor 110, perform frequency modulation and amplification on the to-be-sent signal, and convert the to-be-sent signal into an electromagnetic wave for radiation through the antenna.

For example, the GNSS in this embodiment of this application may include: a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

It may be understood that the structure shown in this embodiment of this application does not constitute a specific limitation on the mobile phone 10. In some other embodiments of this application, the mobile phone 10 may include more or fewer components than those shown in the figure, or combine some components, or split some components, or have different component arrangements. The components shown in the figure may be implemented by hardware, software, or a combination of software and hardware.

With reference to the accompanying drawings, the following describes in detail a chat interface creation method provided in embodiments of this application.

FIG. 2 is a schematic flowchart of a chat interface creation method according to an embodiment of this application. The method may be implemented by any application that runs on the foregoing electronic device and that can implement an instant messaging function. For brief description, an instant messaging app running on the electronic device is used as an example below for description. The method may include the following steps.

S101: The electronic device displays a first group chat interface on a touchscreen, and receives a first operation in the first group chat interface.

When the electronic device runs an application (app), for example, an instant messaging app, the electronic device may display the first group chat interface on the touchscreen of the electronic device (for example, the touchscreen 150 of the mobile phone 10 shown in FIG. 1). It should be understood that the electronic device may alternatively display the first group chat interface when running a web page or another process. This is not limited in this application. This application is described by using an example in which the electronic device runs an instant messaging app. A chat group corresponding to the first group chat interface is a first chat group, and member users of the first chat group include a first user and at least one second user. The first user and the at least one second user perform instant messaging by using the instant messaging app.

The first user is a user who enters the first group chat interface on the electronic device, and the second user is a user who enters the chat interface of the first chat group on another device. It should be understood that, on the electronic device, when the first user enters the first group chat interface, it indicates that the electronic device displays the first group chat interface by using the touchscreen. It should be further understood that the user herein refers to a virtual user, or the user herein may be understood as an account of a group member in the first chat group.

For example, a process in which the first user enters the first group chat interface on the electronic device may be: The electronic device logs in to the instant messaging app based on information about the first user, and creates the first chat group in the instant messaging app. In this way, the electronic device can display the chat interface of the first chat group, that is, the first group chat interface.

It may be understood that an identifier of at least one member user in the first chat group may be displayed in the first group chat interface. An identifier of a member user is used to uniquely identify the member user.

For example, the identifier of the member user may be an avatar of the member user, a user name of the member user, or a chat message box of the member user.

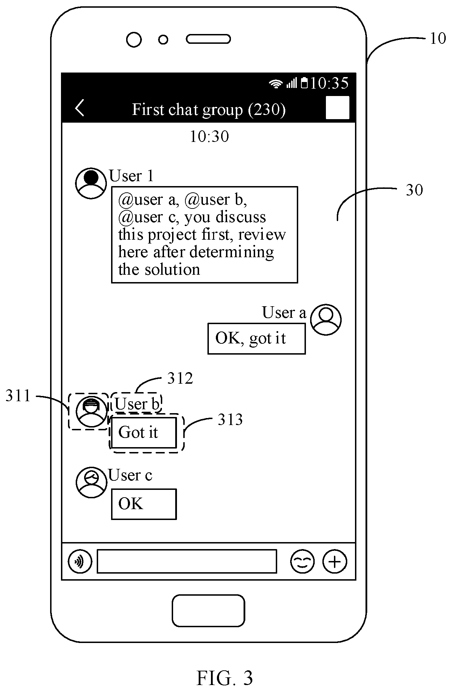

For example, the electronic device is the mobile phone 10 shown in FIG. 1. FIG. 3 is a schematic diagram of a first group chat interface 30 displayed on the display panel 151 of the mobile phone 10.

As shown in FIG. 3, the first chat group includes 230 member users. The first group chat interface 30 of the first chat group includes chat content between a user 1, a user a, a user b, and a user c shown in FIG. 3. The user 1, the user a, the user b, and the user c belong to the 230 member users. It should be understood that the user a shown in FIG. 3 is the first user. The user 1, the user b, and the user c shown in FIG. 3 are all second users.

As shown in FIG. 3, identifiers of the user 1, the user a, the user b, and the user c are displayed in the first group chat interface 30. Using the user b as an example, the identifier of the user b may be an avatar 311 of the user b displayed in the first group chat interface 30, or may be a user name 312 of the user b displayed in the first group chat interface 30, or may be a chat message box 313 of the user b displayed in the first group chat interface 30. This is not limited in this embodiment of this application.

In this way, after the first operation is entered in the first group chat interface, the electronic device may display a second group chat interface based on the first operation. The second group chat interface is a chat interface of a second chat group, the second chat group is another chat group different from the first chat group, and the second chat group and the first chat group include at least one common member user.

It should be understood that if the second chat group and the first chat group include only one common member user, the member user is the first user.

It should be further understood that, when an operation is entered in an interface (for example, the first group chat interface) displayed on the touchscreen of the electronic device, the operation may be entered by using a finger of a person operating the electronic device (briefly referred to as an operator below), or the operation may be entered by using an auxiliary tool such as a stylus pen. This is not limited in this embodiment of this application.

For brief description, this embodiment of this application is described below by using an example in which an operator enters, by using a finger, the operation in the interface displayed on the touchscreen of the electronic device. It should be understood that the operator described herein may be the same as or different from a person corresponding to the first user. This is not limited in this embodiment of this application.

Specifically, the first operation may be a press operation. The press operation may be a double-finger press operation performed by the operator at a first location and a second location in the first group chat interface by using two fingers.

The first location may be a location at which an identifier of any second user (for example, a first second user) in the first chat group is displayed in the first group chat interface. The second location may be a location at which an identifier of another second user (for example, a second second user) other than the first second user in the first chat group is displayed in the first group chat interface, or the second location may be any blank location in the first group chat interface.

The blank location in the first group chat interface refers to a location in the first group chat interface other than a location used to display related information about a member user in the first chat group. Herein, the related information about the member user in the first chat group includes an avatar of the member user in the first chat group, a user name of the member user, and a chat message box of the member user that are displayed in the first group chat interface.

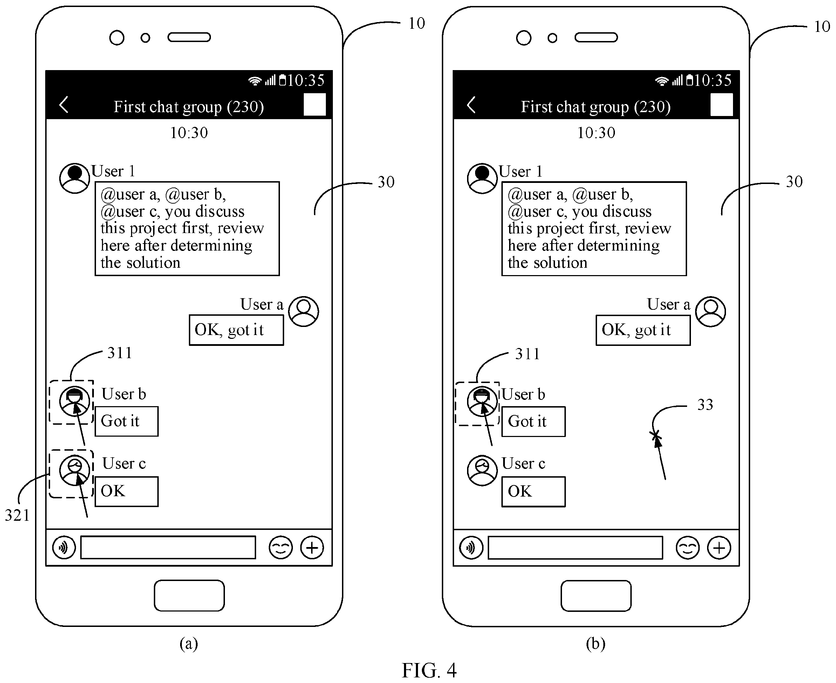

For example, the identifier of the member user is the avatar of the member user. FIG. 4 is a schematic diagram of the first operation according to an embodiment of this application.

As shown in (a) in FIG. 4, the first location may be a location at which the avatar 311 of the user b is displayed in the first group chat interface 30, and the second location may be a location at which an avatar 321 of the user c is displayed in the first group chat interface 30. In this way, the operator may press and hold the first location and the second location in the first group chat interface 30 by using fingers, to enter the first operation in the first group chat interface 30.

As shown in (b) in FIG. 4, the first location may be a location at which the avatar 311 of the user b is displayed in the first group chat interface 30, and the second location may be any blank location 33 in the first group chat interface 30. In this way, the operator may press and hold the first location and the second location in the first group chat interface 30 by using fingers, to enter the first operation in the first group chat interface 30.

S102: The electronic device displays the second group chat interface based on the first operation.

Specifically, the electronic device may display the second group chat interface based on duration of the first operation.

Optionally, when the duration of the first operation is less than a first threshold, the electronic device may display the second group chat interface by performing S1021, to create the chat interface of the second chat group. When the duration of the first operation is greater than the first threshold, the electronic device may display the second group chat interface by performing S1022 to S1024, to create the chat interface of the second chat group. A specific value of the first threshold is not specifically limited in this embodiment of this application.

Optionally, when the duration of the first operation is greater than the first threshold, the electronic device may alternatively display the second group chat interface by performing S1021, to create the chat interface of the second chat group. In this case, when the duration of the first operation is less than the first threshold, the electronic device may display the second group chat interface by performing S1022 to S1024, to create the chat interface of the second chat group.

For ease of description, this embodiment of this application is described below by using an example in which when the duration of the first operation is less than the first threshold, the electronic device displays the second group chat interface by performing S1021, and when the duration of the first operation is greater than the first threshold, the electronic device displays the second group chat interface by performing S1022 to S1024.

S1021: The electronic device displays the second group chat interface in response to the first operation.

The electronic device directly displays the second group chat interface in response to the first operation.

In a possible case, when the first location in the first operation is the location at which the identifier of the first second user in the first chat group is displayed in the first group chat interface, and the second location is the location at which the identifier of the second second user in the first chat group is displayed in the first group chat interface, the second chat group corresponding to the second group chat interface displayed by the electronic device includes the first user, the first second user, and the second second user.

It can be learned that the second group chat interface is a three-person chat interface including the first user, the first second user, and the second second user.

Optionally, the electronic device may separately send, by using a communication module (for example, the communication module 170 shown in FIG. 1), a chat task creation request to devices corresponding to the first second user and the second second user. In response, the devices corresponding to the first second user and the second second user may separately receive the chat task creation request, and separately create a second chat group in response to the chat task creation request.

In another possible case, when the first location in the first operation is the location at which the identifier of the first second user in the first chat group is displayed in the first group chat interface, and the second location is any blank location in the first group chat interface, the second chat group corresponding to the second group chat interface displayed by the electronic device includes the first user and the first second user.

It can be learned that the second group chat interface is a private chat interface between the first user and the first second user.

Optionally, the electronic device may send, by using a communication module (for example, the communication module 170 shown in FIG. 1), a chat task creation request to a device corresponding to the first second user. In response, the device corresponding to the first second user may receive the chat task creation request, and create a second chat group in response to the chat task creation request.

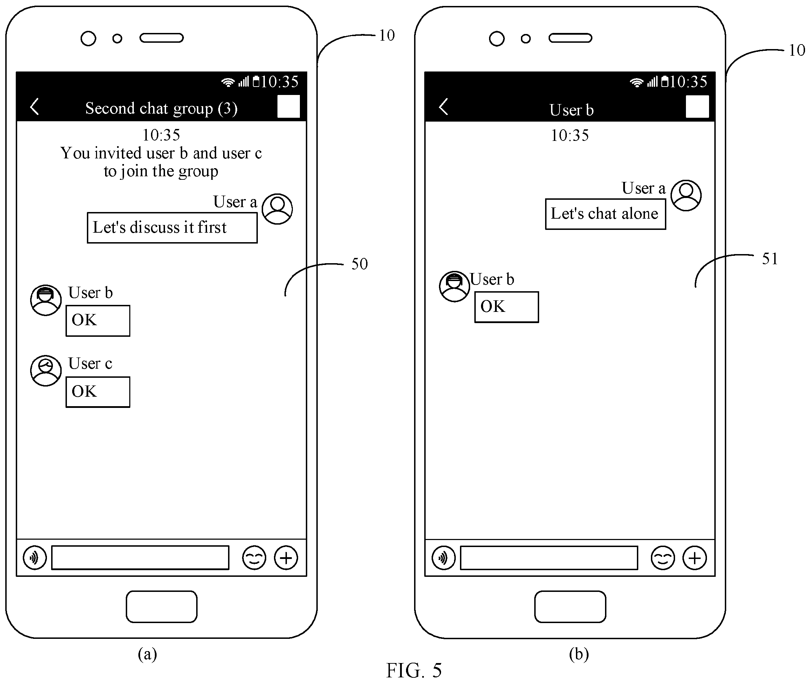

For example, the electronic device is the mobile phone 10 shown in FIG. 1. FIG. 5 is a schematic diagram of a second group chat interface displayed in response to a first operation according to an embodiment of this application.

With reference to FIG. 4, it is assumed that the first location in the first operation is a location that is shown in (a) in FIG. 4 and at which the avatar 311 of the user b is displayed in the first group chat interface 30, and the second location is a location that is shown in (a) in FIG. 4 and at which the avatar 321 of the user c is displayed in the first group chat interface 30.

In this case, as shown in (a) in FIG. 5, in response to the first operation, the mobile phone 10 may directly display, by using the display panel 151 shown in FIG. 1. a second group chat interface 50 shown in (a) in FIG. 5. In addition, member users of a second chat group corresponding to the second group chat interface 50 include three member users: the user a, the user b, and the user c. The second group chat interface 50 may display subsequent chat content of the three member users, for example, chat content shown in (a) in FIG. 5: "User a: Let's discuss it first; User b: OK; User c: OK".

With reference to FIG. 4, it is assumed that the first location in the first operation is a location that is shown in (b) in FIG. 4 and at which the avatar 311 of the user b is displayed in the first group chat interface 30, and the second location is a blank location 33 in the first group chat interface 30 shown in (b) in FIG. 4.

In this case, as shown in (b) in FIG. 5, in response to the first operation, the mobile phone 10 may directly display, by using the display panel 151 shown in FIG. 1. a second group chat interface 51 shown in (b) in FIG. 5. In addition, member users of a second chat group corresponding to the second group chat interface 51 include two member users: the user a and the user b, that is, the second group chat interface 51 is a private chat interface between the user a and the user b. The second group chat interface 50 may display subsequent chat content of the two member users, for example, chat content shown in (b) in FIG. 5: "User a: Let's chat alone; User b: OK".

S1022: The electronic device displays a member selection interface in response to the first operation.

Specifically, the electronic device may first display the member selection interface in response to the first operation. The member selection interface may include an identifier of a member user in the first chat group. For the identifier of the member user, refer to the foregoing description. Details are not described herein again.

In addition, the member selection interface may further include a control toolbar. The control toolbar may include a first control, a second control, a third control, and a fourth control.

The first control may be used to indicate to create a chat task, and the second control may be used to indicate to create a chat task and a file sending task. Herein, a file type of a to-be-sent file in the file sending task includes any file type in a document file, an image file, or a media file. This is not limited in this embodiment of this application. The third control may be used to indicate to create a chat task and a video/audio call task. The fourth control may be used to indicate to create an email sending task. Optionally, the fourth control may be further used to indicate to create a chat task.

It should be noted that, the foregoing description of the controls included in the member selection interface is merely an example. It may be understood that the member selection interface may further include a control indicating another function (for example, the member selection interface may further include a control used to indicate to create a chat task and a group red packet sending task). Details are not described herein.

It should be further understood that, in the member selection interface displayed by the electronic device in response to the first operation, a state of the identifier of the first user is a selected state by default.

It may be understood that the selected state of the identifier of the first user may be visible to the operator, or may be invisible to the operator. In the following example, the selected state of the identifier of the first user in the member selection interface is visible to the operator.

Optionally, in the member selection interface displayed by the electronic device in response to the first operation, a state of an identifier of a second user indicated by the first location and the second location in the first operation is a selected state by default.

For example, if the first location in the first operation is a location at which the identifier of the first second user in the first chat group is displayed in the first group chat interface, and the second location is a location at which the identifier of the second second user in the first chat group is displayed in the first group chat interface, in the member selection interface displayed by the electronic device in response to the first operation, states of the identifiers of the first second user and the second second user are both a selected state by default.

For another example, if the first location in the first operation is a location at which the identifier of the first second user in the first chat group is displayed in the first group chat interface, and the second location is any blank location in the first group chat interface, in the member selection interface displayed by the electronic device in response to the first operation, a state of the identifier of the first second user is a selected state by default.

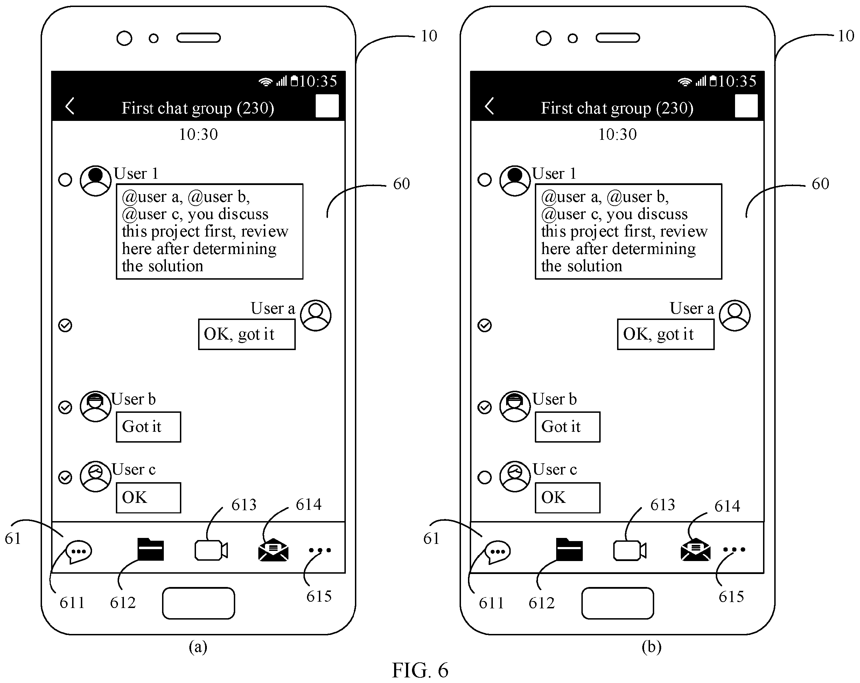

For example, the electronic device is the mobile phone 10 shown in FIG. 1. FIG. 6 is a schematic diagram of the member selection interface according to an embodiment of this application.

With reference to FIG. 4, it is assumed that the first location in the first operation is a location that is shown in (a) in FIG. 4 and at which the avatar 311 of the user b is displayed in the first group chat interface 30, and the second location is a location that is shown in (a) in FIG. 4 and at which the avatar 321 of the user c is displayed in the first group chat interface 30.

In this case, as shown in (a) in FIG. 6, a member selection interface 60 displayed by the mobile phone 10 in response to the first operation includes identifiers of the user 1, the user a, the user b, and the user c in the first group chat interface 30. In addition, states of the identifiers of the user a, the user b, and the user c are a selected state. For example, "✔" shown in (a) in FIG. 6 indicates that a state of an identifier of a user is a selected state.

With reference to FIG. 4, it is assumed that the first location in the first operation is a location that is shown in (b) in FIG. 4 and at which the avatar 311 of the user b is displayed in the first group chat interface 30, and the second location is a blank location 33 in the first group chat interface 30 shown in (b) in FIG. 4.

In this case, as shown in (b) in FIG. 6, a member selection interface 60 displayed by the mobile phone 10 in response to the first operation includes identifiers of the user 1, the user a, the user b, and the user c in the first group chat interface 30. In addition, states of the identifiers of the user a and the user b are a selected state. For example, "✔" shown in (a) in FIG. 6 indicates that a state of an identifier of a user is a selected state.

As shown in FIG. 6, the member selection interface 60 further includes a control toolbar 61. The control toolbar 61 may include a first control 611, a second control 612, a third control 613, and a fourth control 614.

Optionally, the control toolbar 61 may further include a control 615, and the control 615 may be used to link to an interface that includes a control indicating another function.

For example, the control indicating the another function may be a control used to indicate to create a chat task and an address sharing task, or may be a control used to indicate to create a chat task and a group red packet sending task. This is not limited in this embodiment of this application.

S1023: The electronic device receives, in the member selection interface, a second operation for selecting at least one second user, and an operation for a control.

The operator may operate (for example, tap) an identifier of the at least one second user in the member selection interface by using a finger, to enter the second operation in the member selection interface.

In response, the electronic device may mark a state of the identifier of the at least one second user as selected, that is, the state of the identifier of the at least one second user is a selected state.

It should be noted that, for the identifier of the second user that is marked as the selected state by default in the member selection interface displayed by the electronic device in response to the first operation, if the operator operates (for example, taps) the identifier of the second user by using a finger, the second operation for the second user is entered to the electronic device. In response to the second operation, the electronic device may mark a state of the identifier of the second user as unselected, that is, the state of the identifier of the second user is an unselected state.

Optionally, the electronic device may further receive a first slide operation in the member selection interface, and display a member list interface in response to the first slide operation.

A bottom frame of the electronic device is used as a reference line, a distance from a start location of the first slide operation received by the electronic device in the member selection interface to the bottom frame of the electronic device is less than a distance from an end location of the first slide operation to the bottom frame of the electronic device, and an included angle α between a side frame of the electronic device and a connection line between the start location and the end location is greater than or equal to 0° and less than 90°.

Briefly, the first slide operation may be understood as a pull-up slide operation in the member selection interface.

It may be understood that, in some embodiments, the electronic device may alternatively directly display the member list interface in response to the foregoing first operation. This is not limited in this embodiment of this application.

The member list interface may include identifiers of all member users in the first chat group. Optionally, the member list interface may alternatively include identifiers of all users in a communication list of the instant messaging app, or the member list interface may include an identifier of a user invoked from another app, a web page, a process, or the like. This is not limited in this embodiment of this application.

It should be noted that, the identifier of the user in the member list interface may include only an avatar of the user and/or a user name of the user. This is not limited.

It should be understood that the member list interface further includes the foregoing control toolbar. For detailed description of the control toolbar, refer to the foregoing description. Details are not described herein again.

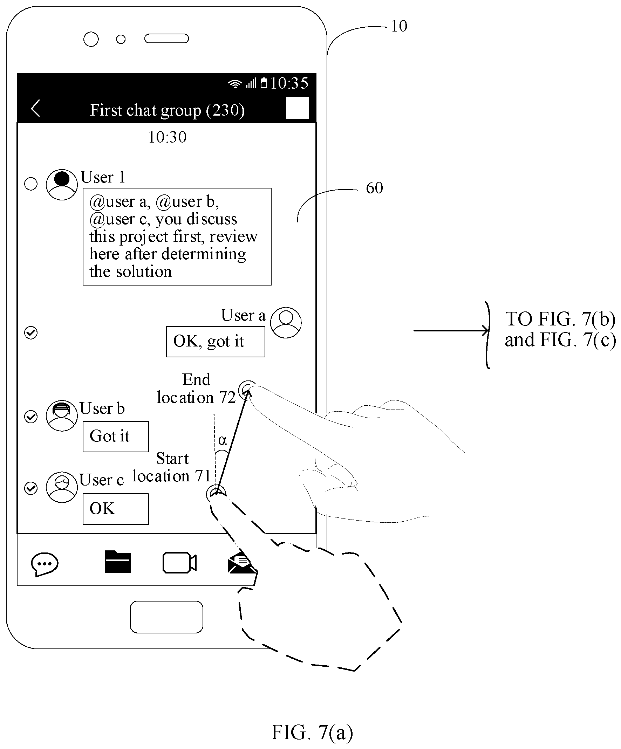

For example, the electronic device is the mobile phone 10 shown in FIG. 1. FIG. 7(a) to FIG. 7(c) are a schematic diagram of displaying a member list interface by the mobile phone 10 in response to a first slide operation received in a member selection interface.

FIG. 7(a) is a schematic diagram of the first slide operation entered in the member selection interface 60. As shown in FIG. 7(a), the finger of the operator may slide from a start location 71 in the member selection interface 60 to an end location 72, to enter the first slide operation described in this embodiment of this application into the mobile phone 10. Herein, a distance from the start location 71 to a bottom frame of the mobile phone 10 is less than a distance from the end location 72 to the bottom frame of the mobile phone 10, and an included angle α between a side frame of the mobile phone 10 and a connection line between the start location 71 and the end location 72 is greater than or equal to 0° and less than 90°.

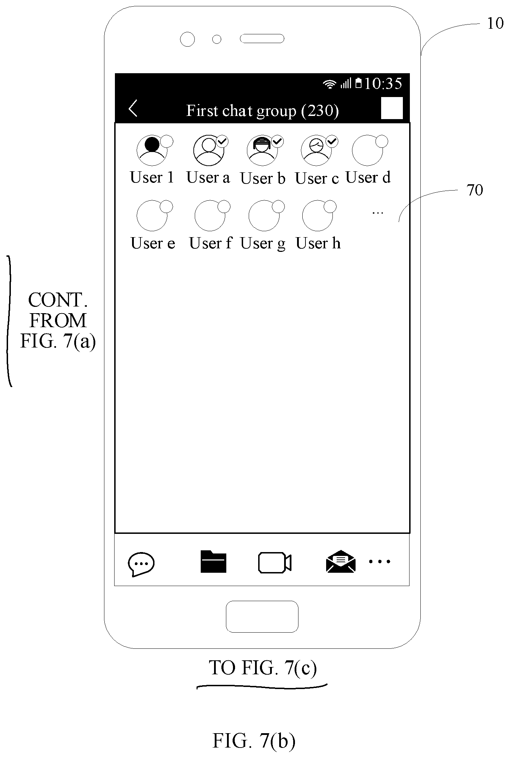

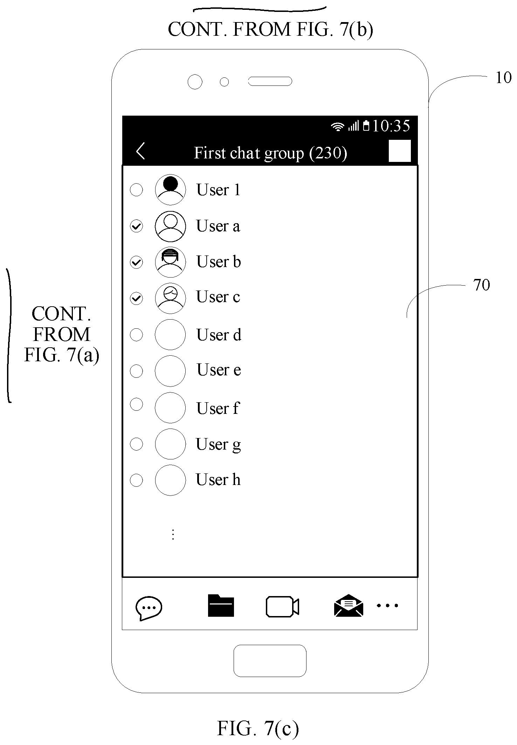

In response to the first slide operation, the mobile phone 10 may display a member list interface 70. A user identifier in the member list interface 70 may be displayed in a format shown in FIG. 7(b), or may be displayed in a format shown in FIG. 7(c). This is not limited in this embodiment of this application.

In this way, the operator may operate (for example, tap) the identifier of the at least one second user in the member list interface, to enter the second operation in the member list interface. In response, the electronic device may mark a state of the identifier of the at least one second user as selected, that is, the state of the identifier of the at least one second user is a selected state.

Further, the electronic device may receive an operation for a control in the control toolbar. Herein, the operation for the control may be an operation performed by the operator to operate (for example, tap) the control by using a finger.

For example, the operator may operate (for example, tap) the first control in the control toolbar by using the finger. In response, the electronic device receives a third operation for the first control.

For another example, the operator may operate (for example, tap) the second control in the control toolbar by using the finger. In response, the electronic device receives a fourth operation for the second control.

For another example, the operator may operate (for example, tap) the third control in the control toolbar by using the finger. In response, the electronic device receives a fifth operation for the third control.

For another example, the operator may operate (for example, tap) the fourth control in the control toolbar by using the finger. In response, the electronic device receives a sixth operation for the fourth control.

S1024: The electronic device displays the second group chat interface in response to the second operation and the operation for the control.

In a possible case, in response to the second operation and the third operation for the first control, the electronic device directly displays a chat interface between the first user and the at least one second user selected through the second operation. The chat interface is the second group chat interface.

It may be learned that the second chat group corresponding to the second group chat interface is a chat group including the first user and the at least one second user.

Optionally, the electronic device may separately send, by using the communication module (for example, the communication module 170 shown in FIG. 1), a chat task creation request to devices corresponding to all member users other than the first user in the second chat group.

In response, the devices corresponding to all the other member users separately receive the chat task creation request, and separately create a second chat group in response to the chat task creation request.

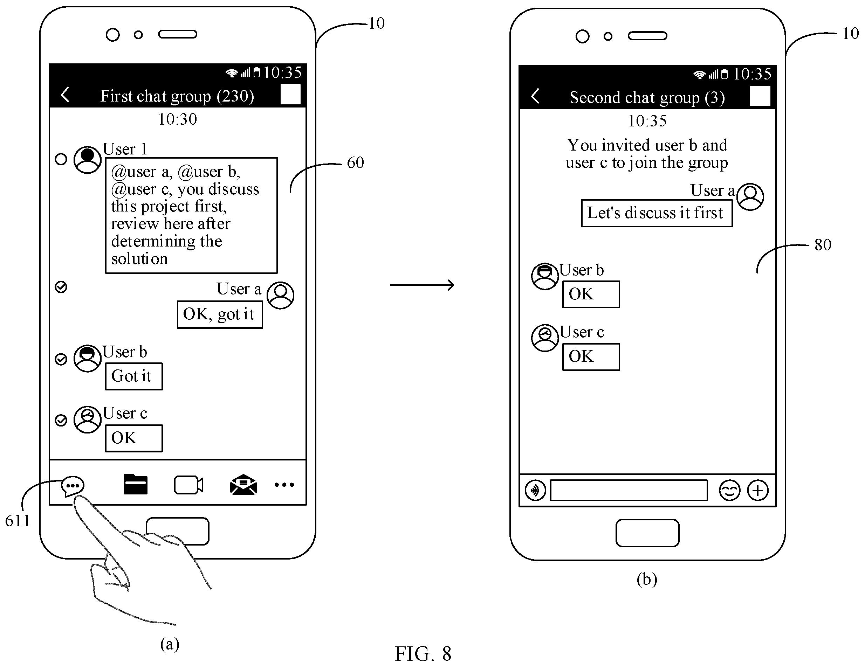

For example, the electronic device is the mobile phone 10 shown in FIG. 1. FIG. 8 is a schematic diagram in which the mobile phone 10 displays a second group chat interface in response to a second operation and a third operation.

As shown in (a) in FIG. 8, the operator taps the identifiers of the user b and the user c in the member selection interface 60 by using the finger (that is, the second operation), and taps the first control 611 in the control toolbar (that is, the third operation). In response, the mobile phone 10 displays, by using the touchscreen 150 shown in FIG. 1, a second group chat interface 80 shown in (b) in FIG. 8.

Member users of a second chat group corresponding to the second group chat interface 80 include three member users: the user a, the user b, and the user c. The second group chat interface 80 may further display subsequent chat content of the three member users, for example, chat content shown in (b) in FIG. 8: "User a: Let's discuss it first; User b: OK; User c: OK".

The mobile phone 10 may alternatively send, by using the communication module 170 shown in FIG. 1, a chat task creation request to devices corresponding to the user b and the user c. In response, the devices corresponding to the user b and the user c separately receive the chat task creation request, and separately create a second chat group in response to the chat task creation request.

In another possible case, the electronic device first displays a file selection interface in response to the second operation and the fourth operation for the second control. Herein, the file selection interface may be any one of a document file selection interface, an image file selection interface, or a media file selection interface, and specifically corresponds to a file type of a file to be sent in a file sending task created according to the indication of the second control.

For example, if the file type of the file to be sent in the file sending task created according to the indication of the second control is a document file, the electronic device first displays a document file selection interface in response to the second operation and the fourth operation.

For another example, if the file type of the file to be sent in the file sending task created according to the indication of the second control is an image file, the electronic device first displays an image file selection interface in response to the second operation and the fourth operation.

For another example, if the file type of the file to be sent in the file sending task created according to the indication of the second control is a media file, the electronic device first displays a media file selection interface in response to the second operation and the fourth operation.

Then, the electronic device receives, in the file selection interface, an operation for selecting at least one file, and receives a confirmation operation in the file selection interface. In this way, in response to the two receiving operations in the file selection interface, the electronic device displays the second group chat interface, and the second group chat interface includes the at least one file selected in the file selection interface. The second chat group corresponding to the second group chat interface is a chat group including the first user and the at least one second user selected through the second operation.

Optionally, the electronic device may separately send, by using the communication module (for example, the communication module 170 shown in FIG. 1), a chat task creation request to devices corresponding to all member users other than the first user in the second chat group.

In response, the devices corresponding to all the other member users separately receive the chat task creation request, and separately create a second chat group in response to the chat task creation request.

Optionally, the electronic device may further send the at least one file selected in the file selection interface to a server of the instant messaging app by using the communication module, so that the devices corresponding to all the other member users can obtain, from the server of the instant messaging app, a file identifier (for example, a thumbnail of an image) of the at least one file selected in the file selection interface, and display the file identifier of the at least one file in a chat interface of a second chat group displayed by the devices corresponding to all the other member users.

It should be understood that, when a member in the second chat group operates (for example, taps) the displayed file identifier in a chat interface displayed on a device corresponding to the member, the device corresponding to the member may download, from the server of the instant messaging app, the at least one file selected in the file selection interface. Therefore, a function of sending the at least one file to the member in the second chat group is implemented.

Certainly, the electronic device may alternatively directly send, by using the communication module, the at least one file to the devices corresponding to all the other member users, so that the devices corresponding to all the other member users receive the at least one file, and display the file identifier of the at least one file in a chat interface of a second chat group displayed by the devices.

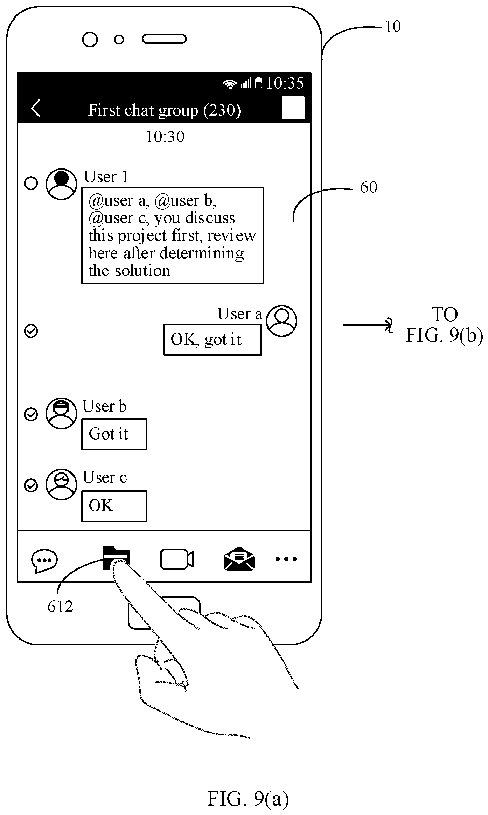

For example, the electronic device is the mobile phone 10 shown in FIG. 1, and the second control indicates that the file in the created file sending task is an image file. FIG. 9(a) to FIG. 9(c) are a schematic diagram in which the mobile phone 10 displays a second group chat interface in response to a second operation and a fourth operation.

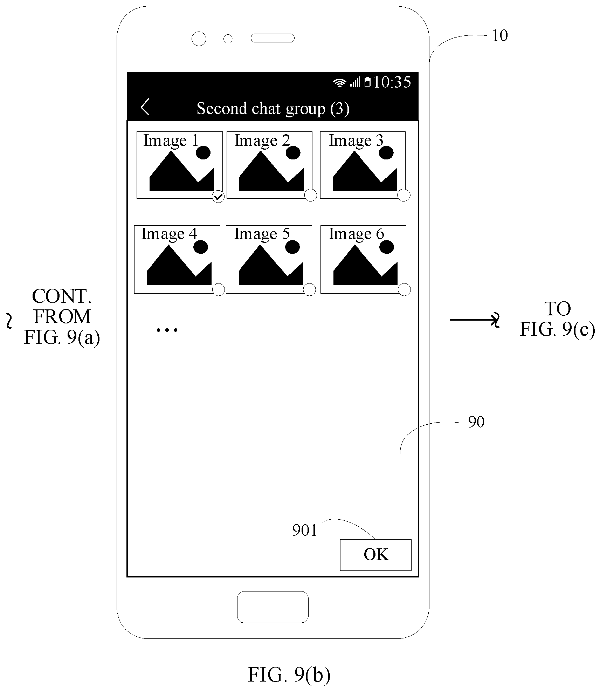

As shown in FIG. 9(a), the operator operates (for example, taps) the identifiers of the user b and the user c (that is, the second operation) and operates (for example, taps) the second control 612 in the control toolbar (that is, the fourth operation) in the member selection interface 60 by using the finger. In response, the mobile phone 10 displays, by using the display panel 151 shown in FIG. 1, an image file selection interface 90 shown in FIG. 9(b).

Then, the operator operates (for example, taps) a to-be-sent image file (for example, an image 1 shown in FIG. 9(b)) in the image file selection interface 90. In response, the mobile phone 10 marks the image 1 selected by the operator in the image file selection interface 90 as selected, for example, marks the image 1 selected by the operator as selected by using "√" shown in FIG. 9(b).

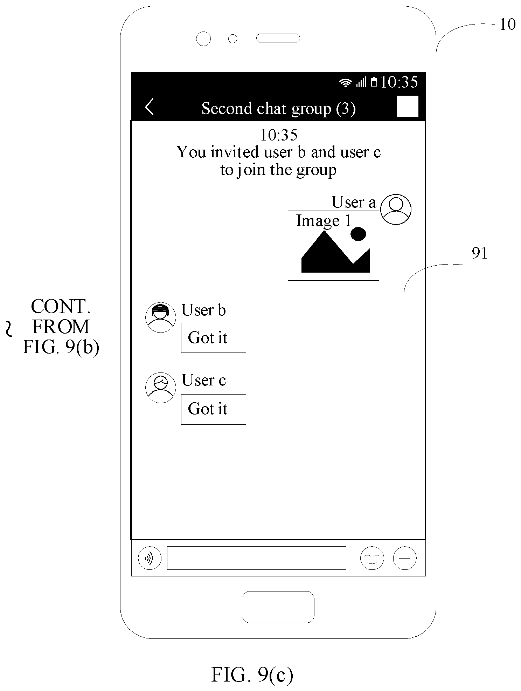

Then, the operator taps a button 901 in the image selection interface 90, that is, enters a confirmation operation to the mobile phone 10. In response, the mobile phone 10 displays, by using the display panel 151 shown in FIG. 1, a second group chat interface 91 shown in FIG. 9(c).

The second group chat interface 91 includes the image 1 selected by the operator in the image file selection interface 90. In addition, member users of a second chat group corresponding to the second group chat interface 91 include three member users: the user a, the user b, and the user c. Certainly, the second group chat interface 91 may further display subsequent chat content of the three member users, for example, chat content shown in FIG. 9(c): "User b: Got it; User c: Got it".

Optionally, the mobile phone 10 may alternatively send, by using the communication module 170 shown in FIG. 1, a chat task creation request to devices corresponding to the user b and the user c.

In response, the devices corresponding to the user b and the user c separately receive the chat task creation request, and separately create a second chat group in response to the chat task creation request.

Optionally, the mobile phone 10 may further send the image 1 to the server of the instant messaging app by using the communication module 170 shown in FIG. 1, so that the devices corresponding to the user b and the user c can separately obtain an identifier (for example, a thumbnail) of the image 1 from the server of the instant messaging app, and display the thumbnail of the image 1 in a chat interface of a second chat group displayed by the devices corresponding to the user b and the user c.

In another possible case, in response to the second operation and the foregoing fifth operation for the third control, the electronic device displays a chat interface between the first user and the at least one second user selected through the second operation, that is, displays the second group chat interface. Herein, the second group chat interface is an interface in which the first user initiates a video/audio call to the at least one member user selected through the second operation.

Optionally, the electronic device may separately send, by using the communication module (for example, the communication module 170 shown in FIG. 1), a chat task creation request to devices corresponding to all member users other than the first user in the second chat group, and separately send a video/audio call request to the devices corresponding to all the other member users.

In response, the devices corresponding to all the other member users separately receive the chat task creation request, and separately create a second chat group in response to the chat task creation request. In addition, the devices corresponding to all the other member users separately receive the video/audio call request, and display a video/audio call access interface on respective displays in response to the video/audio call request.

It may be understood that, after the other member users receive a call access operation of the user in the video/audio call access interface displayed on the devices, a video/audio call between the member users in the second chat group can be implemented.

It should be understood that after a video/audio call between the member users in the second chat group ends, the second group chat interface displayed by the electronic device includes a call record of the video/audio call.

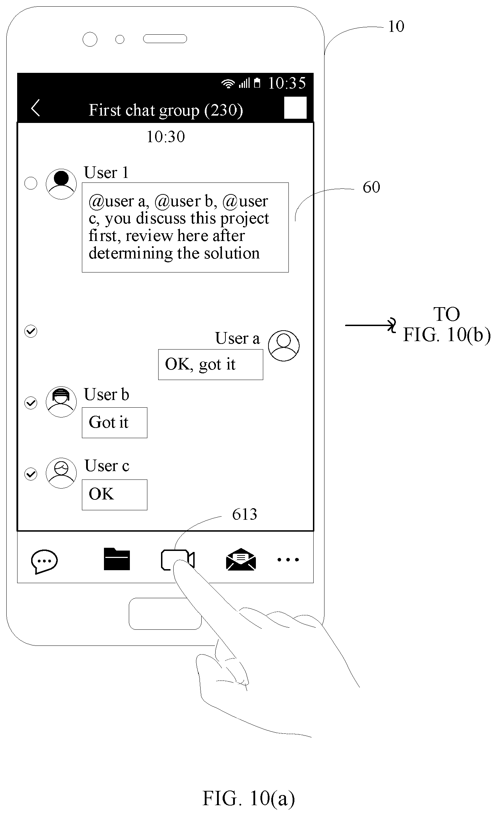

For example, the electronic device is the mobile phone 10 shown in FIG. 1, and the fifth control is used to indicate to create a video call task. FIG. 10(a) to FIG. 10(c) are a schematic diagram in which the mobile phone 10 displays a second group chat interface in response to a second operation and a fifth operation.

As shown in FIG. 10(a), the operator taps the identifiers of the user b and the user c in the member selection interface 60 by using the finger (that is, the second operation), and taps the third control 613 in the control toolbar (that is, the fifth operation).

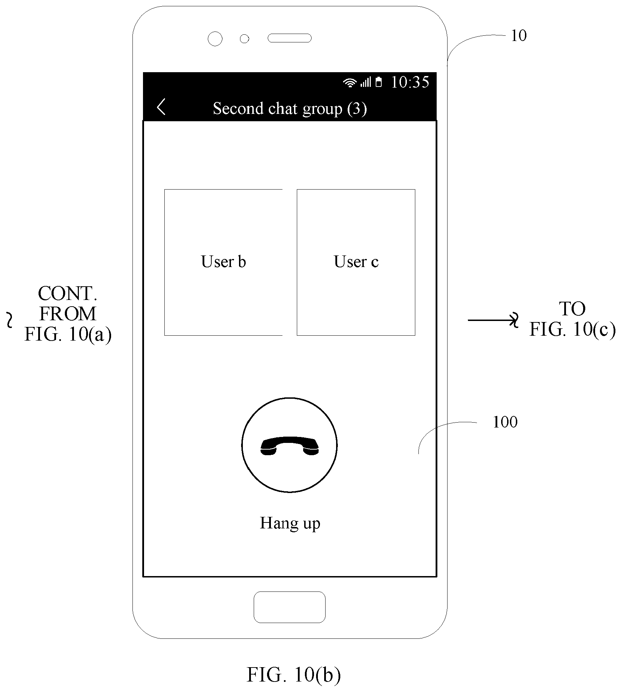

In response, the mobile phone 10 displays, by using the display panel 151 shown in FIG. 1, a second group chat interface 100 shown in FIG. 10(b). In addition, member users of a second chat group corresponding to the second group chat interface 100 include three member users: the user a, the user b, and the user c. In addition, in this scenario, the second group chat interface 100 is an interface in which the first user initiates a video call to the user b and the user c.

The mobile phone 10 may alternatively send, by using the communication module 170 shown in FIG. 1, a chat task creation request to devices corresponding to the user b and the user c, and send a video call request to the devices corresponding to the user b and the user c.

In response, the devices corresponding to the user b and the user c separately receive the chat task creation request, and separately create a second chat group in response to the chat task creation request. The devices corresponding to the user b and the user c further separately receive the video call request, and separately display an access interface (not shown in FIG. 10(a) to FIG. 10(c)) of the video call on respective displays.

When the user b performs a call access operation in a video call access interface displayed on the device corresponding to the user b (for example, an operation that the user b operates (for example, taps) an answer button in the access interface by using a finger), and the user c performs a call access operation in a video call access interface displayed on the device corresponding to the user c (for example, an operation that the user c operates (for example, taps) an answer button in the access interface by using a finger), a video call between the user a, the user b, and the user c can be implemented.

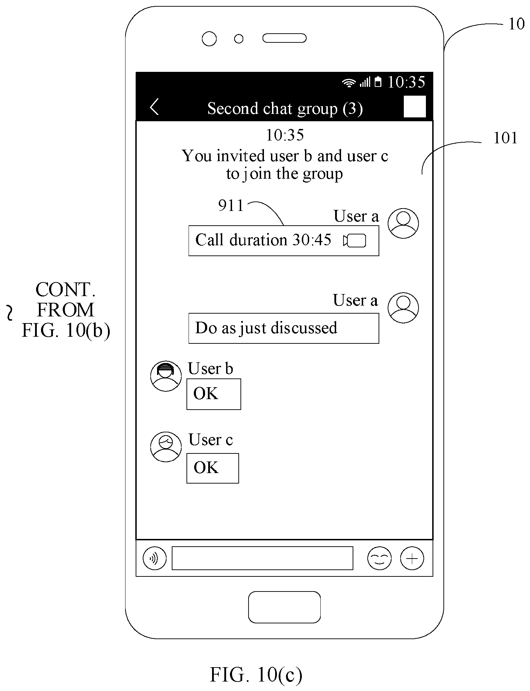

After the video call between the user a, the user b, and the user c ends, the mobile phone 10 displays, by using the display panel 151 shown in FIG. 1, s second group chat interface 101 shown in FIG. 10(c). The second group chat interface 101 includes a video call record of the foregoing video call, for example, a video call record 911 shown in FIG. 10(c).

Certainly, the second group chat interface 101 may further display subsequent chat content of the three member users in the corresponding second chat group, for example, chat content shown in FIG. 9(c): "User a: Do as just discussed; User b: OK; User c: OK".

In another possible case, the electronic device runs a third-party app in response to the second operation and a sixth operation for the fourth control, searches user information of the at least one second user selected through the second operation for an email address of the second user, and writes a found email address into a recipient column in an email writing interface of the third-party app, to quickly write an email to the second user.

In user information of some or all second users in the at least one second user selected through the second operation, email addresses of the some or all second users are configured. This is not limited in this embodiment of this application.

Optionally, if the fourth control is further used to indicate to create a chat task, the electronic device may further display a chat interface between the first user and the at least one second user selected through the second operation, that is, display the second group chat interface. The second chat group corresponding to the second group chat interface is a chat group including the at least one second user and the first user.

Optionally, the electronic device may separately send, by using the communication module (for example, the communication module 170 shown in FIG. 1), a chat task creation request to devices corresponding to all member users other than the first user in the second chat group.

In response, the devices corresponding to all the other member users separately receive the chat task creation request, and separately create a second chat group in response to the chat task creation request.

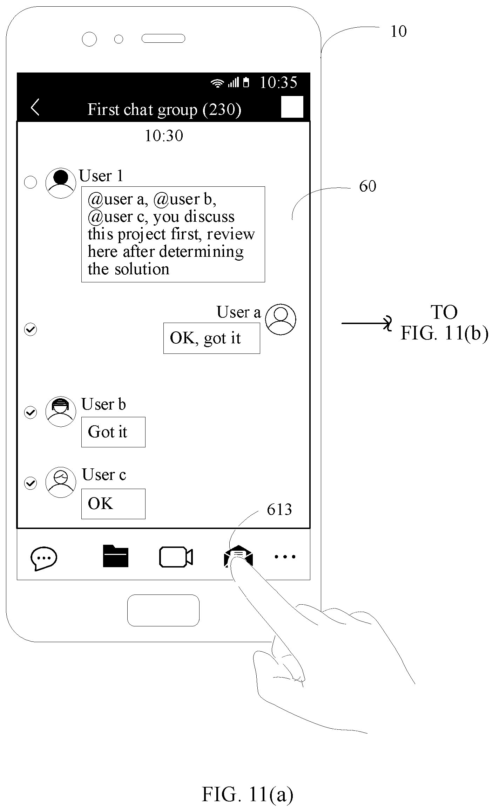

For example, the electronic device is the mobile phone 10 shown in FIG. 1. FIG. 11(a) to FIG. 11(c) are a schematic diagram of creating an email sending task by the mobile phone 10 in response to a second operation and a sixth operation.

As shown in FIG. 11(a), the operator operates (for example, taps) the identifiers of the user b and the user c in the member selection interface 60 by using the finger (that is, the second operation), and taps the fourth control 613 in the control toolbar (that is, the sixth operation).

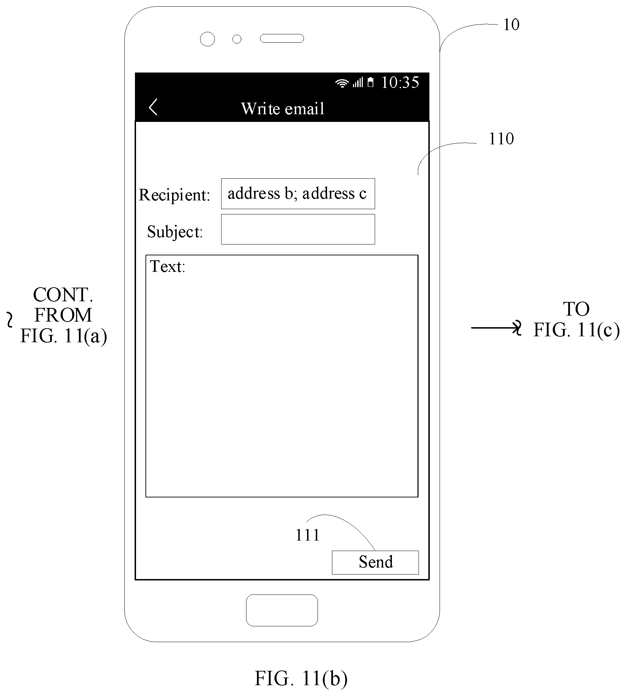

In response, the mobile phone 10 runs a third-party app, and displays, by using the display panel 151 shown in FIG. 1, an email writing interface 110 shown in FIG. 11(b). A recipient column in the email writing interface 110 includes an email address (for example, an address a) of the user b, and includes an email address (for example, an address c) of the user c. In this way, the user a quickly writes an email to the user b and the user c.

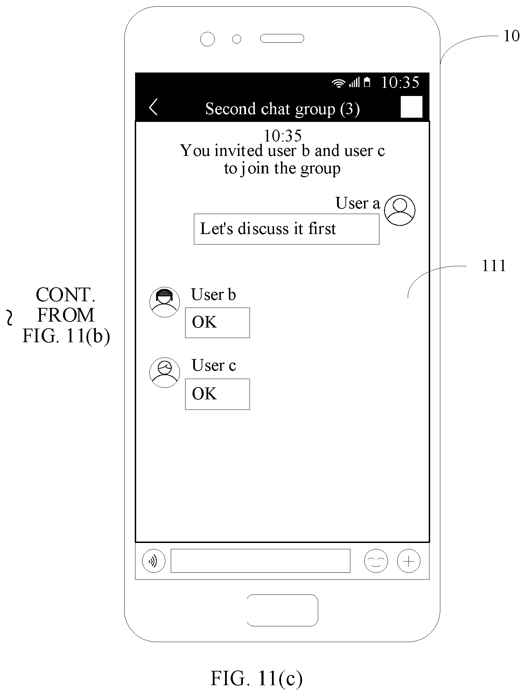

Optionally, if the fourth control is further used to indicate to create a chat task, in response to the second operation and the sixth operation, the mobile phone 10 may further display, by using the display panel 151 shown in FIG. 1, a second group chat interface 111 shown in FIG. 11(c). Member users of a second chat group corresponding to the second group chat interface 111 include three member users: the user a, the user b, and the user c. The second group chat interface 111 may display subsequent chat content of the three member users, for example, chat content shown in FIG. 11(c): "User a: Let's discuss it first; User b: OK; User c: OK".

In addition, it should be noted that, the second group chat interface displayed by the electronic device includes a chat record that is of a member user in the second chat group and that is in the first chat group.

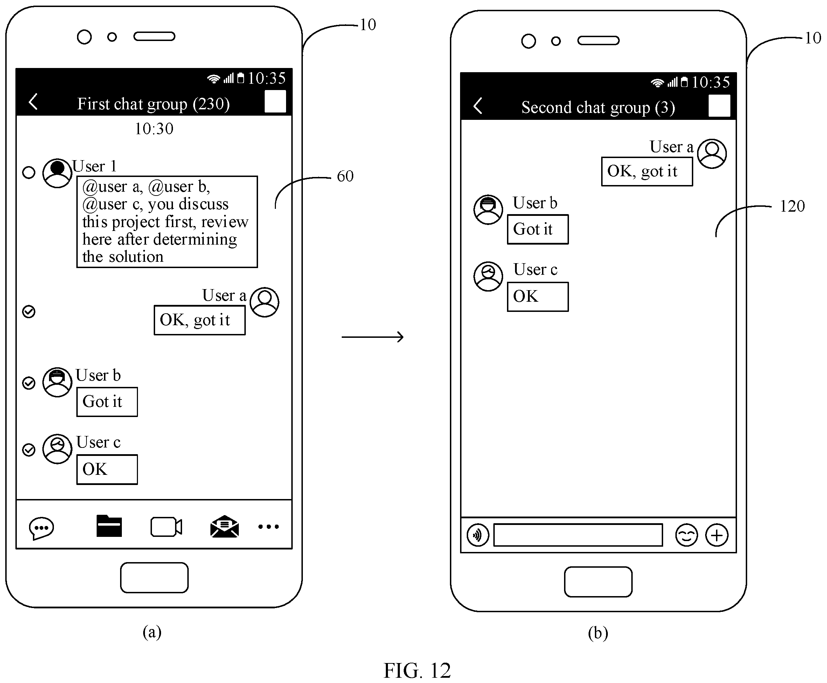

For example, the electronic device is the mobile phone 10 shown in FIG. 1. FIG. 12 is a schematic diagram in which a second group chat interface includes a chat record that is of a member user in a second chat group and that is in a first chat group.

As shown in FIG. 12, in response to the second operation and the third operation (the third operation may be replaced with a fourth operation, a fifth operation, a sixth operation, or the like) in the member selection interface 60 shown in (a) in FIG. 12, the mobile phone 10 may display, by using the display panel 151 shown in FIG. 1, a second group chat interface 120 shown in (b) in FIG. 12. Member users of a second chat group corresponding to the second group chat interface 120 include three member users: the user a, the user b, and the user c. In addition, the second group chat interface 120 includes a chat record of the user a, the user b, and the user c in the first chat group, for example, includes a chat record displayed in the member selection interface 60 shown in (a) in FIG. 12: "User a: OK, got it; User b: Got it; User c: OK".

It may be understood that, for devices of other member users in the second chat group other than the first user, there may be the following case.

Optionally, the electronic device may separately send, to the devices of the other member users, a chat record that is of a member user in the second chat group and that is in the first chat group.

In response, the devices corresponding to the other member users separately receive the chat record, and separately display the chat record in the chat interface of the second chat group displayed by the devices.

Optionally, after creating the chat interface of the second chat group, the devices of the other member users may obtain the chat record that is of the member user in the second chat group and that is in the first chat group from the server of the instant messaging app, and display the obtained chat record in the chat interface of the second chat group displayed by the devices of the other member users.

In this way, according to the chat interface creation method described in S101 and S102, the electronic device may create a new chat interface based on the first operation received in the first group chat interface, that is, the electronic device may create a new chat group based on the first operation received in the first group chat interface.

According to the method, when creating a new chat interface based on a current chat interface, the electronic device does not need to return to a home page of an instant messaging app. To be specific, the method reduces a quantity of intermediate pages to be jumped to when the electronic device creates the new chat interface based on the current chat interface. That is, the method improves efficiency of creating, by the electronic device, the new chat interface based on the current chat interface.

It may be understood that, in some embodiments, both the first location and the second location in the first operation described in S101 may be blank locations in the first group chat interface. That is, the first operation is a press operation at any two blank locations in the first group chat interface.

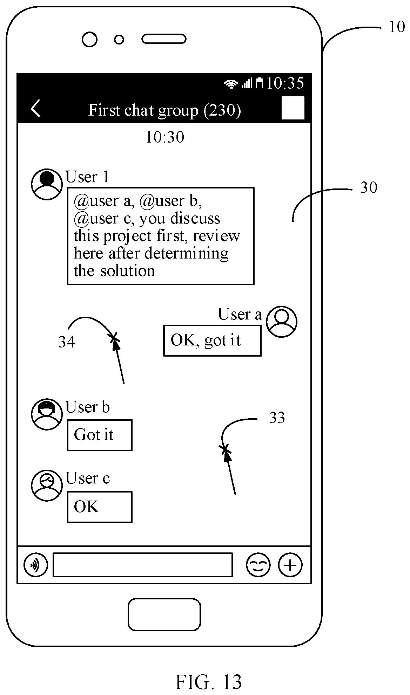

For example, the electronic device is the mobile phone 10 shown in FIG. 1. FIG. 13 is another schematic diagram of the first operation according to an embodiment of this application.

As shown in FIG. 13, the first location in the first operation may be a blank location 33 in the first group chat interface 30, and the second location in the first operation may be a blank location 34 in the first group chat interface 30. In this way, the operator may press and hold the first location and the second location in the first group chat interface 30 by using fingers, to enter the first operation in the first group chat interface 30.

In this case, after detecting the first operation, the electronic device may display the chat interface of the second chat group by performing S1022 to S1024. Certainly, after detecting the first operation and determining that the duration of the first operation is greater than a preset threshold, the electronic device may display the chat interface of the second chat group by performing S1022 to S1024. This is not limited in this embodiment of this application. A value of the preset threshold is not specifically limited.

In some other embodiments, the first operation described in S101 may alternatively be a touch and hold operation at any blank location in the first group chat interface.

For example, as shown in FIG. 13, the operator may perform a touch and hold operation at a blank location 33 or a blank location 44 in the first group chat interface 30 by using a finger, to enter the first operation in the first group chat interface 30.

In this case, when duration of the touch and hold operation is greater than the second threshold, the electronic device may display the chat interface of the second chat group by performing S1022 to S1024. A value of the second threshold is not specifically limited in this embodiment of this application.

In some other embodiments, the first operation described in S101 may alternatively be a second slide operation, and a sliding track of the second slide operation includes an identifier of at least one second user.

In this way, the electronic device may display the second group chat interface in response to the first operation. The second chat group corresponding to the second group chat interface is a chat group including the first user and the at least one second user.

Optionally, for the at least one second user corresponding to the identifier included in the sliding track of the second slide operation, the electronic device may separately send, by using the communication module (for example, the communication module 170 shown in FIG. 1), a chat task creation request to a device corresponding to the at least one second user.

In response, the device corresponding to the at least one second user may receive the chat task creation request, and create a second chat group in response to the chat task creation request.

In a first possible implementation, the second slide operation may pass through a location of the identifier of the at least one second user in the first chat group in the first group chat interface, and ends at a location of an identifier of the first user in the first group chat interface.

In this case, the identifier of the at least one second user is the identifier of the at least one second user included in the sliding track of the second slide operation.

It is easy to understand that the sliding track of the second slide operation further includes the identifier of the first user. It should be further understood that the identifier of the at least one second user may move with sliding of the second slide operation in the first group chat interface.

In this way, based on the second slide operation, the electronic device may detect that the identifier of the at least one second user and the identifier of the first user that are included in the sliding track of the second slide operation overlap at the end location of the second slide operation (that is, a location at which the identifier of the first user is displayed in the first group chat interface). When an overlap area exceeds a threshold, the electronic device displays the second group chat interface. A specific value of the threshold is not specifically limited in this embodiment of this application.

For example, the second slide operation may use a location at which the identifier of the at least one second user in the first chat group is displayed in the first group chat interface as a start location, and use a location at which the identifier of the first user is displayed in the first group chat interface as an end location.

In this case, there may be one or more start points of the second slide operation, and there is one end point of the second slide operation. It should be understood that when there are a plurality of start points of the second slide operation, the second slide operation is a slide operation performed concurrently by a plurality of fingers.

For example, an identifier of a member user in a chat group is a user avatar. As shown in FIG. 3 or FIG. 4, the start location of the second slide operation may be a location at which an avatar of the user b (that is, the second user) is displayed in the first group chat interface 30, and the end location of the second slide operation may be a location at which an avatar of the user a (that is, the first user) is displayed in the first group chat interface 30.

In this case, when the mobile phone 10 detects, based on a slide operation from the start location to the end location in the first group chat interface 30, that the avatar of the user a and the avatar of the user b overlap at the location (that is, the end location) at which the avatar of the user a is displayed in the first group chat interface 30, and an overlap area is greater than a threshold, the mobile phone 10 displays the second group chat interface, and the second chat group corresponding to the second group chat interface is a chat group including the user a and the user b. It can be learned that the second group chat interface is a private chat interface between the user a and the user b.

Alternatively, as shown in FIG. 3 or FIG. 4, the start location of the second slide operation may include a location at which the avatar of the user b (that is, one second user) is displayed in the first group chat interface 30, and a location at which the avatar of the user c (that is, another second user) is displayed in the first group chat interface 30. The end location of the second slide operation may be a location at which the avatar of the user a (that is, the first user) is displayed in the first group chat interface 30.

In this case, when the mobile phone 10 detects, based on a slide operation from the two start locations to the end location in the first group chat interface 30, that the avatar of the user a, the avatar of the user b, and the avatar of the user c overlap at the location (that is, the end location) at which the avatar of the user a is displayed in the first group chat interface 30, and an overlap area is greater than a threshold, the mobile phone 10 displays the second group chat interface, and the second chat group corresponding to the second group chat interface is a chat group including the user a, the user b, and the user c. It can be learned that the second group chat interface is a three-person group chat interface including the user a, the user b, and the user c.

For another example, the second slide operation may use a location at which an identifier of any second user in the first chat group is displayed in the first group chat interface as a start location, and use a location at which the identifier of the first user is displayed in the first group chat interface as an end location. In addition, the second slide operation may further pass through identifiers of j second users, the j second users are j second users in the first chat group other than the any second user, and j is an integer greater than or equal to 0.

In this case, there is one start point of the second slide operation, and there is one end point of the second slide operation. Optionally, the second slide operation may further pass through one or more intermediate points between the start point and the end point.

In a second possible implementation, the second slide operation may pass through locations of the identifier of the at least one second user in the first chat group and the identifier of the first user in the first group chat interface, and end at any blank location in the first group chat interface.

In this case, the identifier of the at least one second user is the identifier of the at least one second user included in the sliding track of the second slide operation.

It is easy to understand that the sliding track of the second slide operation further includes the identifier of the first user. It should be further understood that the identifier of the at least one second user and the identifier of the first user may move with sliding of the second slide operation in the first group chat interface.

In this way, based on the second slide operation, the electronic device may detect that the identifier of the at least one second user and the identifier of the first user that are included in the sliding track of the second slide operation overlap at the end location of the second slide operation (that is, any blank location in the first group chat interface). When an overlap area exceeds a threshold, the electronic device displays the second group chat interface. A specific value of the threshold is not specifically limited in this embodiment of this application.

For example, the second slide operation may use locations at which the identifier of the at least one second user in the first chat group and the identifier of the first user are displayed in the first group chat interface as start locations, and use any blank location in the first group chat interface as an end location. In this case, there are at least two start points of the second slide operation, and there is one end point of the second slide operation, that is, the second slide operation is a slide operation performed concurrently by a plurality of fingers.

For example, an identifier of a member user in a chat group is a user avatar. As shown in (b) in FIG. 4, the start location of the second slide operation may include a location at which the avatar of the user b (that is, one second user) is displayed in the first group chat interface 30, and a location at which the avatar of the user a (that is, the first user) is displayed in the first group chat interface 30. The end location of the second slide operation may be a blank location 33 in the first group chat interface 30.

In this case, when the mobile phone 10 detects, based on a slide operation from the two start locations to the end location in the first group chat interface 30, that the avatar of the user a and the avatar of the user b overlap at the blank location 33 (that is, the end location) in the first group chat interface 30, and an overlap area is greater than a threshold, the mobile phone 10 displays the second group chat interface, and the second chat group corresponding to the second group chat interface is a chat group including the user a and the user b. It can be learned that the second group chat interface is a private chat interface between the user a and the user b.

In a third possible implementation, the second slide operation may pass through locations/a location of identifiers of one or more second users in the first chat group and/or an identifier of the first user in the first group chat interface, and end at a location that is in the first group chat interface and that is of an identifier of any second user other than the one or more second users in the first chat group.

For example, the second slide operation may use the locations of the identifiers of the one or more second users in the first chat group and the identifier of the first user in the first group chat interface as start locations, and use the location that is in the first group chat interface and that is of the identifier of the any second user other than the one or more second users in the first chat group as an end location.

It can be learned that, there are at least two start points of the second slide operation, and there is one end point of the second slide operation, that is, the second slide operation is a slide operation performed concurrently by a plurality of fingers.

In this case, the identifiers of the one or more second users and the identifier of the any second user are the identifier of the at least one second user included in the sliding track of the second slide operation.

It is easy to understand that the sliding track of the second slide operation further includes the identifier of the first user. It should be further understood that the identifiers of the one or more second users and the identifier of the first user may move with sliding of the second slide operation in the first group chat interface.

In this way, based on the second slide operation, the electronic device may detect that the identifiers of the one or more second users, the identifier of the any second user, and the identifier of the first user that are included in the sliding track of the second slide operation overlap at the end location of the second slide operation (that is, a location at which the identifier of the any second user is displayed in the first group chat interface). When an overlap area exceeds a threshold, the electronic device displays the second group chat interface. A specific value of the threshold is not specifically limited in this embodiment of this application.

For example, an identifier of a member user in a chat group is a user avatar. As shown in FIG. 3 or FIG. 4, the start location of the second slide operation may include a location at which the avatar of the user b (that is, one second user) is displayed in the first group chat interface 30, and a location at which the avatar of the user a (that is, the first user) is displayed in the first group chat interface 30. The end location of the second slide operation may be a location at which the avatar of the user c (that is, any second user other than the user b in the first group chat interface) is displayed in the first group chat interface 30.

In this case, when the mobile phone 10 detects, based on a second multi-finger slide operation from the two start locations to the end location in the first group chat interface 30, that the avatar of the user a, the avatar of the user b, and the avatar of the user c overlap at the location (that is, the end location) at which the avatar of the user c is displayed in the first group chat interface 30, and an overlap area is greater than a threshold, the mobile phone 10 displays the second group chat interface, and the second chat group corresponding to the second group chat interface is a chat group including the user a, the user b, and the user c. It can be learned that the second group chat interface is a three-person group chat interface including the user a, the user b, and the user c.

For another example, the second slide operation may use the location of the identifier of the first user in the first group chat interface as a start location, and use the location that is in the first group chat interface and that is of the identifier of the any second user in the first chat group as an end location. It can be learned that, there is one start point of the second slide operation, and there is one end point of the second slide operation.

In this case, the identifier of the any second user is the identifier of the second user included in the sliding track of the second slide operation.

It is easy to understand that the sliding track of the second slide operation further includes the identifier of the first user. It should be further understood that the identifier of the first user may move with sliding of the second slide operation in the first group chat interface.

In this way, based on the second slide operation, the electronic device may detect that the identifier of the first user and the identifier of the any second user that are included in the sliding track of the second slide operation overlap at the end location of the second slide operation (that is, a location at which the identifier of the any second user is displayed in the first group chat interface). When an overlap area exceeds a threshold, the electronic device displays the second group chat interface. A specific value of the threshold is not specifically limited in this embodiment of this application.

For example, an identifier of a member user in a chat group is a user avatar. As shown in FIG. 3 or FIG. 4, the start location of the second slide operation may be a location at which the avatar of the user a (that is, the first user) is displayed in the first group chat interface 30. The end location of the second slide operation may be a location at which the avatar of the user c is displayed in the first group chat interface 30.

In this case, when the mobile phone 10 detects, based on a second multi-finger slide operation from the two start locations to the end location in the first group chat interface 30, that the avatar of the user a and the avatar of the user c overlap at the location (that is, the end location) at which the avatar of the user c is displayed in the first group chat interface 30, and an overlap area is greater than a threshold, the mobile phone 10 displays the second group chat interface, and the second chat group corresponding to the second group chat interface is a chat group including the user a and the user c. It can be learned that the second group chat interface is a private chat interface between the user a and the user c.

For another example, the second slide operation may use the location that is of the identifier of the any second user in the first chat group and that is in the first group chat interface as a start location, and use a location that is in the first group chat interface and that is of an identifier of another second user other than the any second user in the first chat group as an end location. In addition, the second slide operation may further pass through identifiers of k second users, and the k second users are k second users in second users in the first chat group other than the any second user and the another second user. Herein, k is an integer greater than or equal to 0.

It can be learned that, there is one start point of the second slide operation, and there is one end point of the second slide operation. Optionally, the second slide operation may further pass through one or more intermediate points between the start point and the end point.

In this case, the identifier of the any second user, the identifier of the another second user, and the identifiers of the k second users are the identifier of the at least one second user included in the sliding track of the second slide operation.

It is easy to understand that the identifier of the any second user and the identifiers of the k second users may move with sliding of the second slide operation in the first group chat interface.

In this way, based on the second slide operation, the electronic device may detect that the identifier of the any second user, the identifier of the another second user, and the identifiers of the k second users that are included in the sliding track of the second slide operation overlap at the end location of the second slide operation (that is, a location at which the identifier of the any second user is displayed in the first group chat interface). When an overlap area exceeds a threshold, the electronic device displays the second group chat interface. A specific value of the threshold is not specifically limited in this embodiment of this application.

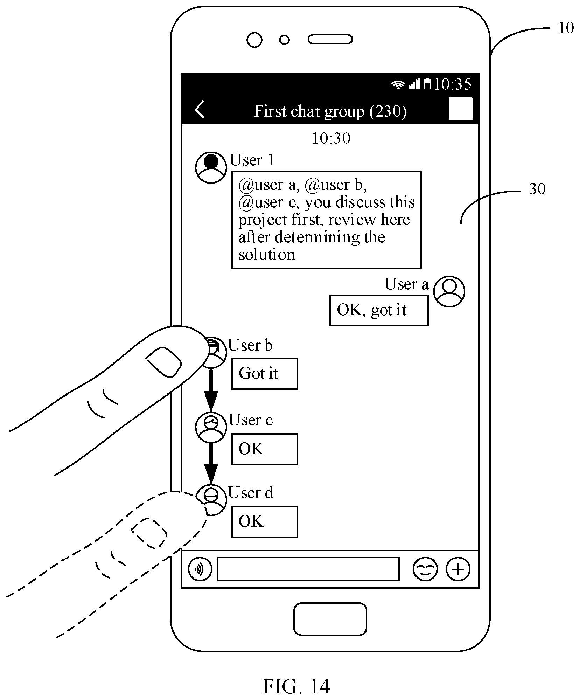

For example, the electronic device is the mobile phone 10 shown in FIG. 1, and an identifier of a member user in a chat group is a user avatar. FIG. 14 is a schematic diagram of the second slide operation according to an embodiment of this application.

As shown in FIG. 14, the sliding track of the second slide operation may be shown by a straight line with an arrow in FIG. 14. The start location of the second slide operation may be a location at which the avatar of the user b (that is, the any second user) is displayed in the first group chat interface 30. The end location of the second slide operation may be a location at which an avatar of a user d (that is, the another second user) is displayed in the first group chat interface 30. In addition, the sliding track of the second slide operation further passes through the avatar of the user c (that is, the foregoing k second users, where a value of k is 1).

In this case, when the mobile phone 10 detects, based on a slide operation that the operator uses a finger to slide from the location (that is, the start location) at which the avatar of the user b is displayed in the first group chat interface 30 through a location (that is, an intermediate point) at which the avatar of the user c is displayed in the first group chat interface 30 to a location (that is, the end location) at which the avatar of the user d is displayed in the first group chat interface 30, that the avatar of the user b. the avatar of the user c, and the avatar of the user d overlap at the location (that is, the end location) at which the avatar of the user d is displayed in the first group chat interface, and an overlap area is greater than a threshold, the mobile phone 10 displays the second group chat interface, and the second chat group corresponding to the second group chat interface is a chat group including the user a, the user b, the user c, and the user d. It can be learned that the second group chat interface is a four-person group chat interface including the user a, the user b, the user c, and the user d.

In this way, according to the method in the foregoing embodiments, the electronic device may display a new chat interface in response to the slide operation received in the first group chat interface, that is, the electronic device may create a new chat group in response to the slide operation received in the first group chat interface.

According to the method, when creating a new chat interface based on a current chat interface, the electronic device does not need to return to a home page of an instant messaging app. To be specific, the method reduces a quantity of intermediate pages to be jumped to when the electronic device creates the new chat interface based on the current chat interface. That is, the method improves efficiency of creating, by the electronic device, the new chat interface based on the current chat interface.

In conclusion, according to the chat interface creation method provided in this embodiment of this application, the electronic device may display a new chat interface based on the first operation received in the first group chat interface, that is, the electronic device may create a new chat group based on the first operation received in the first group chat interface. According to the method, when creating a new chat interface based on a current chat interface, the electronic device does not need to return to a home page of an instant messaging app. To be specific, the method reduces a quantity of intermediate pages to be jumped to when the electronic device creates the new chat interface based on the current chat interface. Therefore, efficiency of creating, by the electronic device, the new chat interface based on the current chat interface is improved.

The foregoing mainly describes the solutions provided in embodiments of this application from a perspective of the method. To implement the foregoing functions, corresponding hardware structures and/or software modules for performing the functions are included. A person skilled in the art should be easily aware that, with reference to the example units and algorithm steps described in the embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, a chat interface creation apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, division into the modules in embodiments of this application is merely an example, and is logical function division. In actual implementation, there may be another division manner.

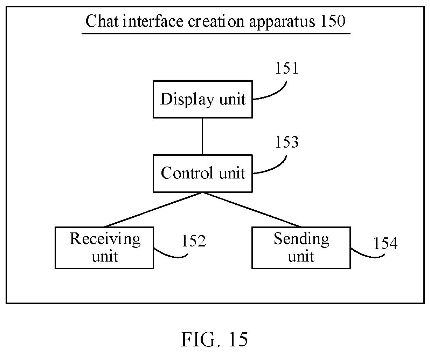

FIG. 15 is a schematic diagram of a structure of a chat interface creation apparatus 150 according to an embodiment of this application. The apparatus 150 may be configured to perform the foregoing chat interface creation method, for example, configured to perform the method shown in FIG. 2. The apparatus 150 may include a display unit 151, a receiving unit 152, and a control unit 153.

The display unit 151 is configured to display a first group chat interface, where the first group chat interface is a chat interface of a first chat group, and the first chat group includes a first user who enters the first group chat interface on the apparatus. The receiving unit 152 is configured to receive a first operation in the first group chat interface. The control unit 153 is configured to control, based on the first operation, to display a second group chat interface. The second group chat interface is a chat interface of a second chat group, and both the second chat group and the first chat group include the first user.

For example, with reference to FIG. 2, the display unit 151 and the receiving unit 152 may be configured to perform S101, and the control unit 153 may be configured to perform S102.

Optionally, the first operation is a press operation for a first location and a second location in the first group chat interface. The first location is a location that is of an identifier of any second user in the first chat group and that is in the first group chat interface.

If duration of the press operation is greater than a first threshold, the control unit 153 is specifically configured to control, in response to the first operation, to display a member selection interface that includes an identifier of a member user in the first chat group. The receiving unit 152 is further configured to receive, in the member selection interface, a second operation for selecting at least one second user. The control unit 153 is further specifically configured to control, based on the second operation, to display the second group chat interface. The second chat group corresponding to the second group chat interface is a chat group including the first user and the at least one second user selected through the second operation.

For example, with reference to FIG. 2, the receiving unit 152 and the control unit 153 may be configured to perform S102.

Optionally, the member selection interface further includes a first control used to indicate to create a chat task, and the receiving unit 152 is further configured to receive a third operation for the first control in the member selection interface. The control unit 153 is further specifically configured to control, in response to the second operation and the third operation, to display the second group chat interface.

For example, with reference to FIG. 2, the receiving unit 152 and the control unit 153 may be configured to perform S102.

Optionally, the member selection interface further includes a second control used to indicate to create a chat task and a file sending task. A file type of a to-be-sent file in the file sending task includes any file type in a document file, an image file, or a media file.

The receiving unit 152 is further configured to receive a fourth operation for the second control in the member selection interface. The control unit 153 is further specifically configured to control, in response to the second operation and the fourth operation, to display the second group chat interface. The second group chat interface includes the file sent in the file sending task. Usually, the file included in the second group chat interface is a file identifier of the file. For example, when the file is an image file, a file identifier of the image file may be a thumbnail of the image file.

For example, with reference to FIG. 2, the receiving unit 152 and the control unit 153 may be configured to perform S102.

Optionally, the apparatus 150 further includes a sending unit 154. The sending unit 154 is configured to send the file to be sent in the file sending task to a device corresponding to the member user selected through the second operation. Alternatively, the sending unit 154 is configured to send the file to be sent in the file sending task to a server, so that a device corresponding to the member user selected through the second operation can obtain, from the server, the file to be sent in the file sending task. The server may be a server of an instant messaging application.

Optionally, the member selection interface further includes a third control used to indicate to create a chat task and a video/audio call task.

The receiving unit 152 is further configured to receive a fifth operation for the third control in the member selection interface. The control unit 153 is further specifically configured to control, in response to the second operation and the fifth operation, to display the second group chat interface. The second group chat interface is an interface for initiating a video/audio call to the member user selected through the second operation.

For example, with reference to FIG. 2, the receiving unit 152 and the control unit 153 may be configured to perform S102.

Optionally, the sending unit 154 is further configured to send a video/audio call request to a device corresponding to the member user selected through the second operation.

Optionally, the display unit 151 is further configured to: after a video/audio call ends, display a second group chat interface including a video/audio call record.

Optionally, the first operation is a press operation for a first location and a second location in the first group chat interface. The first location is a location that is of an identifier of any second user in the first chat group and that is in the first group chat interface. If duration of the press operation is less than a first threshold and the second location is any blank location in the first group chat interface, the control unit 153 is specifically configured to control, in response to the first operation, to display the second group chat interface. The second chat group corresponding to the second group chat interface is a two-person chat group including the first user and the any second user.

For example, with reference to FIG. 2, the control unit 153 may be configured to perform S102.

Optionally, the first operation is a press operation for a first location and a second location in the first group chat interface. The first location is a location that is of an identifier of any second user in the first chat group and that is in the first group chat interface. If duration of the press operation is less than a first threshold and the second location is a location that is of an identifier of another second user other than the any second user in the first chat group and that is in the first group chat interface, the control unit 153 is specifically configured to control, in response to the first operation, to display the second group chat interface. The second chat group corresponding to the second group chat interface is a three-person chat group including the first user, the any second user, and the another second user.

For example, with reference to FIG. 2, the control unit 153 may be configured to perform S102.

Optionally, the first operation is a press operation for any two blank locations in the first group chat interface. The control unit 153 is specifically configured to control, in response to the first operation, to display a member selection interface that includes an identifier of a member user in the first chat group.

The receiving unit 152 is further configured to receive, in the member selection interface, a second operation for selecting at least one second user. The control unit 153 is further specifically configured to control, based on the second operation, to display the second group chat interface. The second chat group corresponding to the second group chat interface is a group including the first user and the at least one second user selected through the second operation.

For example, with reference to FIG. 2, the receiving unit 152 and the control unit 153 may be configured to perform S102.

Optionally, the first operation is a touch and hold operation for any blank location in the first group chat interface. If duration of the touch and hold operation is greater than a second threshold, the control unit 153 is specifically configured to control, in response to the first operation, to display a member selection interface that includes an identifier of a member user in the first chat group. The receiving unit 152 is further configured to receive, in the member selection interface, a second operation for selecting at least one second user. The control unit 153 is further specifically configured to control, based on the second operation, to display the second group chat interface. The second chat group corresponding to the second group chat interface is a group including the first user and the at least one second user selected through the second operation.

For example, with reference to FIG. 2, the receiving unit 152 and the control unit 153 may be configured to perform S102.

Optionally, the first operation is a slide operation. A sliding track of the slide operation includes an identifier of at least one second user. The control unit 153 is specifically configured to control, in response to the first operation, to display the second group chat interface. The second chat group corresponding to the second group chat interface is a chat group including the first user and the at least one second user.

For example, with reference to FIG. 2, the control unit 153 may be configured to perform S102.

Optionally, the slide operation passes through a location of the identifier of the at least one second user in the first group chat interface, and ends at a location of an identifier of the first user in the first group chat interface.

Optionally, the identifier of the at least one second user moves with sliding of the slide operation in the first group chat interface.

Optionally, the slide operation passes through locations of the identifier of the at least one second user and an identifier of the first user in the first group chat interface, and ends at any blank location in the first group chat interface.

Optionally, the identifier of the at least one second user and the identifier of the first user move with sliding of the slide operation in the first group chat interface.

Optionally, the slide operation passes through locations/a location of identifiers of one or more second users in the first chat group and/or an identifier of the first user in the first group chat interface, and ends at a location that is in the first group chat interface and that is of an identifier of any second user other than the one or more second users in the first chat group.

It can be learned that the at least one second user included in the sliding track of the slide operation includes the one or more second users and the any second user.

When the slide operation passes through the locations that are in the first group chat interface and that are of the identifiers of the one or more second users in the first chat group, the identifiers of the one or more second users move with sliding of the slide operation in the first group chat interface.

When the slide operation passes through the location that is in the first group chat interface and that is of the identifier of the first user in the first chat group, the identifier of the first user moves with sliding of the slide operation in the first group chat interface.

When the slide operation passes through the locations of the identifiers of the one or more second users in the first chat group and the identifier of the first user in the first group chat interface, the identifiers of the one or more second users and the identifier of the first user move with sliding of the slide operation in the first group chat interface.

Optionally, the second group chat interface includes a chat record that is of a member user in the second chat group and that is in the first chat group.

Optionally, the sending unit 154 is further configured to send the chat record to a device of another member user other than the first user in the second chat group. Alternatively, the sending unit 154 is further configured to send the chat record to a server, so that a device of another member user other than the first user in the second chat group can obtain the chat record from the server. The server may be a server of an instant messaging application.

For specific descriptions of the foregoing optional manners, refer to the foregoing method embodiments. Details are not described herein again. In addition, for explanation of any apparatus 150 provided above and description of beneficial effects, refer to the foregoing corresponding method embodiments. Details are not described again.

For example, with reference to FIG. 1, a function implemented by the display unit 151 in the apparatus 150 may be implemented by using the display panel 151 shown in FIG. 1. A function implemented by the receiving unit 152 may be implemented by using the touch panel 152 shown in FIG. 1. A function implemented by the control unit 153 may be implemented by using the processor 110 shown in FIG. 1. A function implemented by the sending unit 154 may be implemented by using the communication module 170 shown in FIG. 1.

In a possible embodiment, this application further provides an electronic device. A structure of the electronic device may be shown in FIG. 1, and includes a processor 110, an internal memory 120, an external memory 130, a touchscreen 150, a communication module 170, and the like. The electronic device is configured to implement a function of the method performed by the electronic device in FIG. 2 to FIG. 14.

All or some of the foregoing embodiments may be implemented by software, hardware, firmware, or any combination thereof. When a software program is used to implement the embodiments, all or a part of the embodiments may be implemented in a form of a computer program product. The computer program product includes one or more computer instructions. When the computer-executable instructions are executed on a computer, the procedures or functions according to embodiments of this application are all or partially generated. The computer may be a general-purpose computer, a dedicated computer, a computer network, or other programmable apparatuses.

The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device such as a server or a data center that integrates one or more usable media. The usable medium may be a magnetic medium (for example, a floppy disk, a hard disk, or a magnetic tape), an optical medium (for example, a DVD), a semi-conductor medium (for example, a solid-state disk (solid state disk, SSD)), or the like.

The foregoing descriptions are merely specific implementations of the present invention. However, the protection scope of the present invention is not limited thereto. Any change or replacement readily figured out by a person skilled in the art within the technical scope disclosed in the present invention shall fall within the protection scope of the present invention. Therefore, the protection scope of the present invention shall be subject to the protection scope of the claims.

## Claims

1. A chat interface creation method performed by an electronic device comprising a touchscreen, the method comprising the steps of:
• displaying (S 101) a first group chat interface on the touchscreen,
- wherein the first group chat interface is a chat interface of a first chat group, and the first chat group comprises a first user who enters the first group chat interface on the electronic device and further multiple second users,
- wherein the first group chat interface displays an identifier of each of the first user and the multiple second users;
• receiving a first operation in the first group chat interface, wherein the first operation is a slide operation, and an uninterrupted sliding track of the slide operation comprises the identifiers of at least two second users among the multiple second users; and
• in response to the first operation, displaying (S 102) a second group chat interface based on the first operation, wherein the second group chat interface is a chat interface of a second chat group, and the second chat group comprises the first user and the at least two second users.

2. The method according to claim 1, wherein the slide operation passes through a location of the identifier of the at least two second users in the first group chat interface, and ends at a location of the identifier of the first user in the first group chat interface.

3. The method according to claim 2, wherein the identifiers of the at least two second users move with sliding of the slide operation in the first group chat interface.

4. The method according to claim 1, wherein the slide operation passes through locations of the identifiers of the at least two second users and the identifier of the first user in the first group chat interface, and ends at any blank location in the first group chat interface.

5. The method according to claim 1, wherein the slide operation passes through locations/a location of identifiers of one or more second users among the multiple second users in the first chat group and/or the identifier of the first user in the first group chat interface, and ends at a location that is in the first group chat interface and that is of an identifier of any second user other than the one or more second users in the first chat group, and the at least two second users comprises the one or more second users and the any second user.

6. The method according to any one of claims 1 to 5, wherein the second group chat interface comprises a chat record that is of a member user in the second chat group and that is in the first chat group.

7. An electronic device comprising a touchscreen, wherein the electronic device is configured to perform the method according to any of claims 1 to 6.

8. A computer-readable storage medium, wherein the computer-readable storage medium comprises program instructions, and when the program instructions are run on an electronic device comprising a touchscreen, the electronic device is caused to perform the chat interface creation method according to any one of claims 1 to 6.

## Patentansprüche

1. Chat-Schnittstellenerzeugungsverfahren, das durch eine elektronische Vorrichtung, die einen Berührungsbildschirm umfasst, durchgeführt wird, wobei das Verfahren die folgenden Schritte umfasst:
• Anzeigen (S 101) einer ersten Gruppenchatschnittstelle auf dem Berührungsbildschirm,
- wobei die erste Gruppenchatschnittstelle eine Chat-Schnittstelle einer ersten Chat-Gruppe ist und die erste Chat-Gruppe einen ersten Anwender, der in die erste Gruppenchatschnittstelle in der elektronischen Vorrichtung eintritt, und ferner mehrere zweite Anwender umfasst, und
- die erste Gruppenchatschnittstelle eine Kennung jedes des ersten Anwenders und der mehreren zweiten Anwender anzeigt;
• Empfangen einer ersten Operation in der ersten Gruppenchatschnittstelle, wobei die erste Operation eine Schiebeoperation ist und eine ununterbrochene Schiebebahn der Schiebeoperation die Kennungen von mindestens zwei zweiten Anwendern unter den mehreren zweiten Anwendern umfasst; und
• in Reaktion auf die erste Operation Anzeigen (S 102) einer zweiten Gruppenchatschnittstelle auf der Grundlage der ersten Operation, wobei die zweite Gruppenchatschnittstelle eine Chat-Schnittstelle einer zweiten Chat-Gruppe ist und die zweite Chat-Gruppe den ersten Anwender und die mindestens zwei zweiten Anwender umfasst.

2. Verfahren nach Anspruch 1, wobei die Schiebeoperation einen Ort der Kennung der mindestens zwei zweiten Anwender in der ersten Gruppenchatschnittstelle durchläuft und bei einem Ort der Kennung des ersten Anwenders in der ersten Gruppenchatschnittstelle endet.

3. Verfahren nach Anspruch 2, wobei die Kennungen der mindestens zwei zweiten Anwender sich mit dem Schieben der Schiebeoperation in der ersten Gruppenchatschnittstelle bewegen.

4. Verfahren nach Anspruch 1, wobei die Schiebeoperation Orte der Kennungen der mindestens zwei zweiten Anwender und der Kennung des ersten Anwenders in der ersten Gruppenchatschnittstelle durchläuft und bei einem beliebigen leeren Ort in der ersten Gruppenchatschnittstelle endet.

5. Verfahren nach Anspruch 1, wobei die Schiebeoperation Orte/einen Ort von Kennungen eines oder mehrerer zweiter Anwender unter den mehreren zweiten Anwendern in der ersten Chat-Gruppe und/oder die Kennung des ersten Anwenders in der ersten Gruppenchatschnittstelle durchläuft und bei einem Ort endet, der in der ersten Gruppenchatschnittstelle ist und der von einer Kennung eines beliebigen zweiten Anwenders außer dem einen oder den mehreren zweiten Anwendern in der ersten Chat-Gruppe stammt, und die mindestens zwei zweiten Anwender den einen oder die mehreren zweiten Anwender und den beliebigen zweiten Anwender umfassen.

6. Verfahren nach einem der Ansprüche 1 bis 5, wobei die zweite Gruppenchatschnittstelle einen Chatdatensatz umfasst, der von einem Mitgliedsanwender in der zweiten Chat-Gruppe stammt und der in der ersten Chat-Gruppe ist.

7. Elektronische Vorrichtung, die einen Berührungsbildschirm umfasst, wobei die elektronische Vorrichtung konfiguriert ist, das Verfahren nach einem der Ansprüche 1 bis 6 durchzuführen.

8. Computerlesbares Speichermedium, wobei das computerlesbare Speichermedium Programmbefehle enthält und dann, wenn die Programmbefehle in einer elektronischen Vorrichtung, die einen Berührungsbildschirm umfasst, ausgeführt werden, die elektronische Vorrichtung veranlasst wird, das Chat-Schnittstellenerzeugungsverfahren nach einem der Ansprüche 1 bis 6 durchzuführen.

## Revendications

1. Procédé de création d'interface de discussion réalisé par un dispositif électronique comprenant un écran tactile, le procédé comprenant les étapes suivantes :
• affichage (S 101) d'une première interface de discussion de groupe sur l'écran tactile,
- la première interface de discussion de groupe étant une interface de discussion d'un premier groupe de discussion, et le premier groupe de discussion comprenant un premier utilisateur, qui accède à la première interface de discussion de groupe sur le dispositif électronique, et de multiples deuxièmes utilisateurs supplémentaires,
- la première interface de discussion de groupe affichant un identifiant du premier utilisateur et de chacun des multiples deuxièmes utilisateurs ;
• réception d'une première opération dans la première interface de discussion de groupe, la première opération étant une opération de glissement, et une trajectoire de glissement ininterrompue de l'opération de glissement comprenant les identifiants d'au moins deux deuxièmes utilisateurs parmi les multiples deuxièmes utilisateurs ; et
• en réponse à la première opération, affichage (S 102) d'une deuxième interface de discussion de groupe sur la base de la première opération, la deuxième interface de discussion de groupe étant une interface de discussion d'un deuxième groupe de discussion, et le deuxième groupe de discussion comprenant le premier utilisateur et les au moins deux deuxièmes utilisateurs.

2. Procédé selon la revendication 1, dans lequel l'opération de glissement passe par une position de l'identifiant des au moins deux deuxièmes utilisateurs dans la première interface de discussion de groupe, et se termine à une position de l'identifiant du premier utilisateur dans la première interface de discussion de groupe.

3. Procédé selon la revendication 2, dans lequel les identifiants des au moins deux deuxièmes utilisateurs se déplacent conjointement avec le glissement de l'opération de glissement dans la première interface de discussion de groupe.

4. Procédé selon la revendication 1, dans lequel l'opération de glissement passe par des positions des identifiants des au moins deux deuxièmes utilisateurs et de l'identifiant du premier utilisateur dans la première interface de discussion de groupe, et se termine à une position non occupée quelconque dans la première interface de discussion de groupe.

5. Procédé selon la revendication 1, dans lequel l'opération de glissement passe par des positions/une position d'identifiants d'un ou de plusieurs deuxièmes utilisateurs parmi les multiples deuxièmes utilisateurs dans le premier groupe de discussion et/ou de l'identifiant du premier utilisateur dans la première interface de discussion de groupe, et se termine à une position qui se trouve dans la première interface de discussion de groupe et qui est celle d'un identifiant d'un deuxième utilisateur quelconque autre que le ou les deuxièmes utilisateurs dans le premier groupe de discussion, et les au moins deux deuxièmes utilisateurs comprennent le ou les deuxièmes utilisateurs et le deuxième utilisateur quelconque.

6. Procédé selon l'une quelconque des revendications 1 à 5, dans lequel la deuxième interface de discussion de groupe comprend un enregistrement de discussion qui est celui d'un utilisateur membre du deuxième groupe de discussion et qui se trouve dans le premier groupe de discussion.

7. Dispositif électronique comprenant un écran tactile, le dispositif électronique étant configuré pour réaliser le procédé selon l'une quelconque des revendications 1 à 6.

8. Support de stockage lisible par ordinateur, le support de stockage lisible par ordinateur comprenant des instructions de programme et, lorsque les instructions de programme sont exécutées sur un dispositif électronique comprenant un écran tactile, le dispositif électronique étant amené à réaliser le procédé de création d'interface de discussion selon l'une quelconque des revendications 1 à 6.
